# EUROPEAN PATENT SPECIFICATION

(11) **EP 2 211 075 B1**
(45) Date of publication and mention of the grant of the patent: **26.03.2014**
(21) Application number: 10000596.6
(22) Date of filing: 21.01.2010
(51) Int. Cl.: F16H 61/02, F16H 61/682, F16H 59/72, F16H 63/46

(54) **Gear change instruction apparatus and method**
Gangschaltungsanweisungsvorrichtung und -verfahren
Appareil et procédé d'instruction de changement de vitesses

(30) Priority: 21.01.2009 JP 2009011432
(43) Date of publication of application: 28.07.2010
(73) Proprietor: Yamaha Hatsudoki Kabushiki Kaisha, Shizuoka-ken Shizuoka 438-8501 (JP)
(72) Inventor: Zenno, Toru, Iwata-shi Shizuoka-ken 438-8501 (JP)
(74) Representative: Grünecker, Kinkeldey, Stockmair & Schwanhäusser

(56) References cited:
- EP-A1- 1 018 450
- EP-A2- 1 669 627
- WO-A1-01/72546
- DE-A1- 3 601 708
- DE-A1- 19 830 950
- US-A- 4 439 158
- US-A- 5 070 746
- US-A1- 2004 061 603

## Description

The present invention relates to a gear change instruction apparatus and method, as specified in claims 1 and 14. In the present specification, a gear change, respectively shift change, means an operation for changing the gear position of a transmission.

Control apparatuses for vehicles in which actuators perform gear changing operations without riders operating clutches have been known. In a clutch engagement control apparatus discussed in JP 2006-170225 A, for example, when a rider turns an up-shift switch or a down-shift switch on, a clutch actuator operates, to shift a clutch from an engaged state to a disengaged state. After the rider changes the gear position of a transmission, the clutch actuator shifts the clutch from the disengaged state to the engaged state. In this case, the clutch engagement control apparatus changes the engagement speed of the clutch by the clutch actuator according to a change in difference between the rotational speed on the driving side of the clutch and the rotational speed on the driven side thereof.

US 2004/0061603 discloses the features of the preambles of claims 1 and 14.

Generally, friction clutches are shifted from a disengaged state to an engaged state via a half-clutched state. In the half-clutched state, a plate on the driving side of the clutch and a plate on the driven side thereof rotate relatively while coming into contact with each other. That is, a difference in rotational speed occurs between the plates, although both the plates are in contact with each other. If the half-clutched state is continued for a long time, the accuracy in control of the clutch deteriorates.

It is an objective of the present invention to provide a gear change instruction apparatus and method to overcome the problems described above, and in particular to prevent the accuracy in control of a clutch device from deteriorating.

According to the present invention, said objective is solved by a gear change instruction apparatus for a friction clutch device having a driving plate and a driven plate and for a transmission having a plurality of gear positions, the gear change instruction apparatus being configured to generate an instruction to change the gear position of the transmission and comprising: an estimator configured to estimate a calorific value by friction between the driving plate and the driven plate in the friction clutch device; a determiner configured to determine whether a change in the gear position of the transmission is required based on the calorific value estimated by the estimator; and a notifier configured to make a notification to an operator of the gear change instruction apparatus to change the gear position of the transmission when the determiner determines that the gear position of the transmission must be changed.

In the gear change instruction apparatus, the estimator estimates the calorific value by the friction between the driving plate and the driven plate in the clutch device, and the determiner determines whether the change in the gear position of the transmission is required based on the estimated calorific value. If it is determined that the change in the gear position of the transmission is required, the notifier makes the notification to the operator (e.g. to the rider of a vehicle in which the gear change instruction apparatus is comprised) to change the gear position of the transmission.

Thus, the rider can quickly and reliably recognize that the gear position should be changed. Therefore, the rider can quickly change the gear position. This prevents the clutch device from being maintained in the half-clutched state for a long time. This results in prevention of deterioration in the accuracy in control of the clutch device by the friction between the driving plate and the driven plate.

In this case, the presence or absence of thermal expansion of the driving plate and the driven plate in the clutch device can be estimated based on the estimated calorific value. Therefore, the timing of urging the rider to change the gear position can be determined in a simple configuration.

According to the invention, the determiner is configured to determine that the gear position of the transmission must be changed when the calorific value estimated by the estimator is a predetermined first value or more.

In this case, the timing of urging the rider to change the gear position can be easily and appropriately determined.

According to the invention, a temperature detector is configured to detect an environmental temperature of the friction clutch device, the estimator is preferably configured to estimate the temperature of the friction clutch device based on the estimated calorific value and a detected value of the temperature detector, and the determiner is preferably configured to determine whether or not a change in the gear position of the transmission is required based on the temperature estimated by the estimator.

The presence or absence of thermal expansion of the clutch device depends on the environmental temperature of the clutch device. In the above-mentioned configuration, the temperature of the clutch device is estimated based on the estimated calorific value and the detected environmental temperature.

In this case, the presence or absence of thermal expansion of the driving plate and the driven plate in the clutch device can be accurately estimated based on the temperature of the clutch device. Even when the environmental temperature of the clutch device is changed, therefore, the timing of urging the rider to change the gear position can be appropriately determined.

Preferably, the determiner is configured to determine that the gear position of the transmission must be changed when the temperature estimated by the estimator becomes a predetermined second value or more.

In this case, even when the ambient temperature of the clutch device is changed, therefore, the timing of urging the rider to change the gear position can be easily and appropriately determined.

Preferably, the estimator comprises a first rotational speed acquirer configured to acquire a rotational speed of the driving plate in the friction clutch device, a second rotational speed acquirer configured to acquire a rotational speed of the driven plate in the friction clutch device, and a calculator configured to time-integrate a difference between the rotational speed acquired by the first rotational speed acquirer and the rotational speed acquired by the second rotational speed acquirer, and to calculate the calorific value based on a time-integrated value.

In this case, the calorific value is calculated based on the time integration of the difference between the rotational speed of the driving unit and the rotational speed of the driven unit. This enables the calorific value inside the clutch device to be estimated in a relatively simple configuration and at low cost.

Preferably, the estimator is configured to start to time-integrate the difference between the rotational speeds when the driving plate and the driven plate in the friction clutch device start to move relatively nearer to each other, or the estimator is configured to start the time-integrate the difference between the rotational speeds when the driving plate and the driven plate in the friction clutch device move by a predetermined distance relatively nearer to each other, or the estimator is configured to start to time-integrate the difference between the rotational speeds when the difference between the rotational speeds increases to a third value greater than zero.

In this case, the time point where the time integration of the difference between the rotational speeds is started can be easily and stably determined. The need to calculate the difference between the rotational speeds is eliminated to determine the time point where the time integration of the difference between the rotational speeds is started.

Alternatively, the time point where the time integration of the difference between the rotational speeds is started can be easily and stably determined. The time integration of the difference between the rotational speeds can be started at the time point where heat generation by the friction between the driving plate and the driven plate is actually started. This results in an improvement in the estimation accuracy of the calorific value.

Alternatively, the time integration of the difference between the rotational speeds can be started at the time point where the calorific value by the friction between the driving plate and the driven plate starts to increase. This results in an improvement in the estimation accuracy of the calorific value.

Preferably, the estimator is configured to finish time-integrating the difference between the rotational speeds when the difference between the rotational speeds reaches substantially zero.

In this case, the time integration of the difference between the rotational speeds can be terminated at the time point where no heat is generated by the friction between the driving plate and the driven plate. This results in an improvement in the estimation accuracy of the calorific value.

Preferably, the estimator is configured to finish time-integrating the difference between the rotational speeds after an elapse of a predetermined period of time since the time integration of the difference between the rotational speeds was started.

In this case, even when the difference between the rotational speeds occurs again after the difference between the rotational speeds reaches substantially zero, the difference between the rotational speeds is time-integrated. This results in an improvement in the estimation accuracy of the calorific value. The time point where the time integration of the difference between the rotational speeds is terminated can be determined easily and stably.

Preferably, a gear position detector is configured to detect completion of the change in the gear position of the transmission, and, preferably, the notifier is configured to terminate the notification when the gear position detector detects the completion of the change in the gear position of the transmission.

In this case, the operator/rider is enabled to reliably recognize that the gear position of the transmission must be changed until the gear position is changed. This can reliably prevent deterioration in the accuracy in control of the clutch device by the friction between the driving plate and the driven plate.

Preferably, the notifier includes a display configured to display the notification to the operator to change the gear position of the transmission.

In this case, the operator/rider can visually recognize that the gear position must be changed.

Preferably, the estimation by the estimator, the determination by the determiner, and the notification by the notifier are respectively performed at each of a plurality of gear positions of the transmission.

In this case, the operator/rider is prevented from driving the vehicle for a long time with the clutch device maintained in the half-clutched state at the improper gear position when the vehicle is started and when the vehicle travels at any speed. This can reliably prevent deterioration in the accuracy in control of the clutch device by the friction between the driving plate and the driven plate in various traveling states of the vehicle.

Preferably, a vehicle comprises: a friction clutch device having a driving plate and a driven plate; a transmission having a plurality of gear positions; and the gear change instruction apparatus according to any one of the above embodiments. Further, preferably, an engine is configured to generate a torque to rotate at least one driving wheel, a transmission path is configured to transmit the torque generated by the engine to the driving wheel, and the friction clutch device and the transmission are provided in the transmission path.

In the vehicle, the torque generated by the engine is transmitted to the driving wheel via the friction clutch device and the transmission in the transmission path. In the gear change instruction apparatus, the notification to the operator/rider to change the gear position of the transmission is made. This enables the operator/rider to quickly and reliably recognize that the gear position should be changed. Therefore, the operator/rider can quickly change the gear position. This prevents the clutch device from being maintained in the half-clutched state for a long time. This results in prevention of deterioration in the accuracy in control of the clutch device by the friction between the driving plate and the driven plate.

Preferably, a shift switch is operable by the operator to generate an instruction to change the gear position of the transmission, a clutch actuator is configured to drive the clutch friction device, a shift actuator is configured to drive the transmission, and a controller is configured to control the clutch actuator and the shift actuator based on the instruction from the shift switch.

In this case, the operator/rider generates an instruction to change the gear position of the transmission by operating the shift switch. The controller controls the clutch actuator and the shift actuator based on the instruction from the shift switch. This causes the clutch device to be driven by the clutch actuator, and causes the transmission to be driven by the shift actuator. As a result, the gear position of the transmission is changed. In this case, the clutch device is prevented from being maintained in the half-clutched state for a long time. This prevents deterioration in the accuracy in the control of the clutch device by the controller.

Moreover, according to the present invention the aforesaid objection is solved by a gear change instruction method for a friction clutch device having a driving plate and a driven plate and for a transmission having a plurality of gear positions, the gear change instruction method generating an instruction to change the gear position of the transmission and comprising the following steps: estimating a calorific value by friction between the driving plate and the driven plate in the friction clutch device; determining whether a change in the gear position of the transmission is required based on the calorific value estimated; and making a notification to an operator to change the gear position of the transmission when it is determined that the gear position of the transmission must be changed.

In the following, the present invention is explained in greater detail by means of embodiments thereof in conjunction with the accompanying drawings, wherein:
Fig. 1 is a side view of a motorcycle including a shift change instruction apparatus according to a preferred embodiment;
Fig. 2 is a cross-sectional view mainly illustrating the internal configuration of a power unit;
Fig. 3 is a block diagram mainly illustrating the configuration of the shift change instruction apparatus;
Fig. 4 is a schematic view illustrating the schematic configuration of a handle of a motorcycle;
Fig. 5 is a timing chart illustrating processing for estimating a calorific value in a clutch at the start of a motorcycle;
Fig. 6 is a timing chart illustrating processing for estimating the temperature of a clutch at the start of a motorcycle;
Fig. 7 is a schematic view illustrating a display panel;
Fig. 8 is a flow chart illustrating a first example of shift change instruction processing by a CPU in an ECU;
Fig. 9 is a flowchart illustrating notification control by a CPU in an ECU;
Fig. 10 is a flowchart illustrating a second example of shift change instruction processing by a CPU in an ECU;
Fig. 11 is a flow chart illustrating notification control by a CPU in an ECU; and
Fig. 12 is a flowchart illustrating another example of shift change instruction processing by a CPU in an ECU.

Preferred embodiments will be now described in detail with reference to the drawings. An operation for changing the gear position of a transmission from the current gear position to the succeeding gear position is referred to as up-shifting, and an operation for changing the gear position of the transmission from the current gear position to the preceding gear position is referred to as down-shifting. A case where the shift change instruction apparatus (gear change instruction apparatus) is applied to a motorcycle serving as an example of a vehicle will be described below.

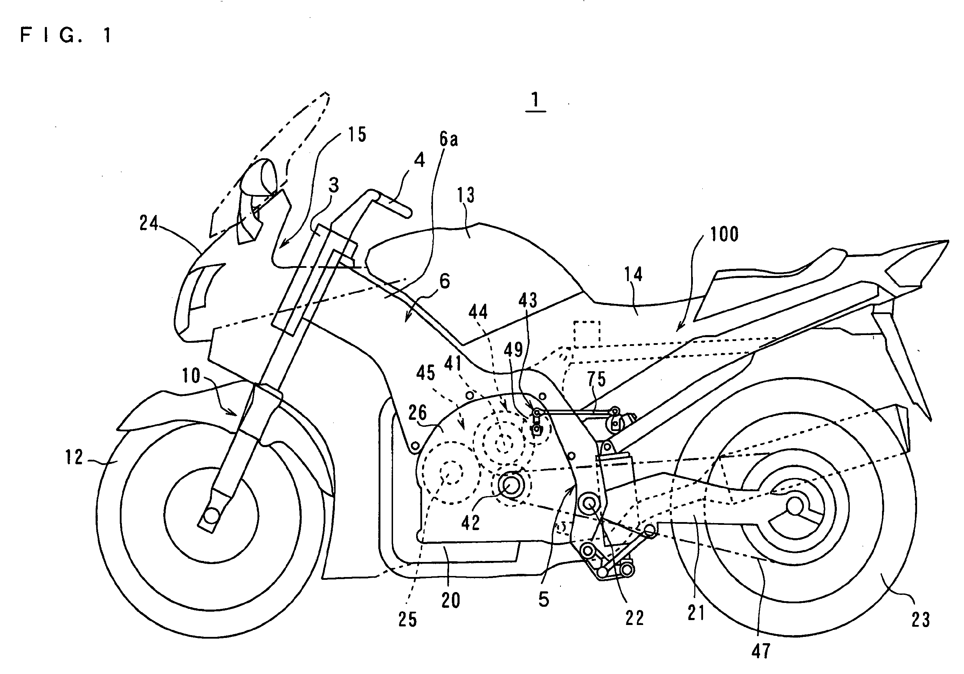

Fig. 1 is a side view of a motorcycle including a shift change instruction apparatus (gear change instruction apparatus) according to a preferred embodiment.

As illustrated in Fig. 1, a motorcycle 1 includes a vehicle body 100. The vehicle body 100 includes a head pipe 3 and a vehicle body frame 6. The vehicle body frame 6 includes a pair of right and left frame parts 6a extending backward from the head pipe 3. In Fig. 1, only the one frame part 6a is illustrated. The rear of the frame part 6a extends downward, and is connected to a rear arm bracket 5. A front end of a rear arm 21 is supported swingably up and down on the rear arm bracket 5 with a pivot shaft 22 sandwiched therebetween. A rear wheel (driving wheel) 23 is supported at a rear end of the rear arm 21.

A front fork 10 is connected to the head pipe 3. A handle 4 is provided at an upper end of the front fork 10, and a front wheel 12 is rotatably provided at a lower end of the front fork 10. A fuel tank 13 is arranged on the top of the frame part 6a, and a seat 14 is arranged behind the fuel tank 13.

A power unit 20 is attached to the frame part 6a and the rear arm bracket 5. The power unit 20 includes an engine 45, a clutch (friction clutch device) 44, and a transmission 43. The engine 45, the clutch 44, and the transmission 43 are integrally assembled in a crank case 26. The engine 45 has a crank shaft 25. The crank shaft 25 extends in a right-and-left direction.

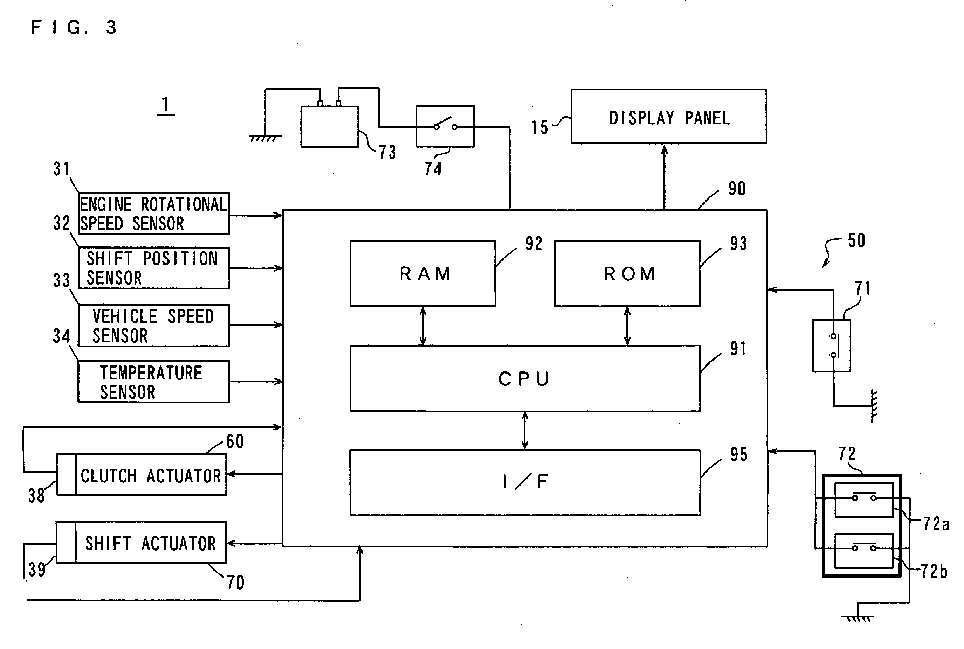

The engine 45 is a water-cooled engine. Therefore, the motorcycle 1 includes a radiator (not illustrated). The radiator stores cooling water for cooling the engine 45. A temperature sensor (temperature detector) 34 illustrated in Fig. 3, described below, detects the water temperature of the cooling water.

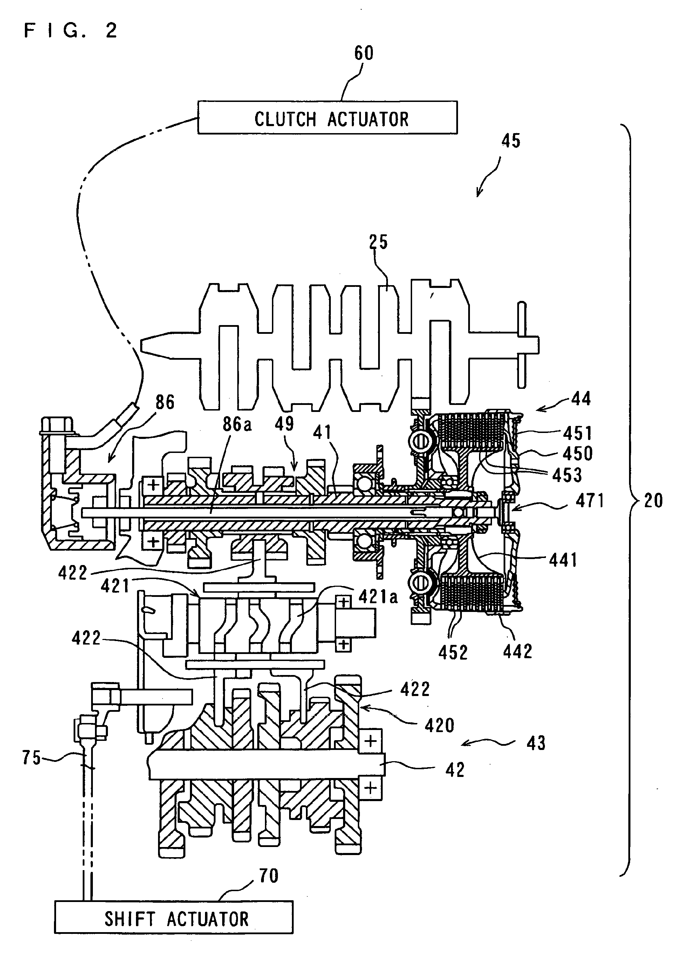

Fig. 2 is a cross-sectional view mainly illustrating the internal configuration of the power unit 20.

As illustrated in Fig. 2, the power unit 20 includes the engine 45, the clutch 44, and the transmission 43. In the present preferred embodiment, the clutch 44 is a wet multiple disk friction clutch. Fig. 2 illustrates only the crank shaft 25 in the engine 45.

The crank shaft 25, a main shaft 41, and a drive shaft 42 extend parallel to one another. The main shaft 41 has a cylindrical shape. The clutch 44 connects the crank shaft 25 and the main shaft 41. A clutch actuator 60 switches the clutch 44 to an engaged state and a disengaged state. A shift actuator 70 switches (changes the gear positions of) transmission gears 49 and 420, described below, of the transmission 43. The engaged state and the disengaged state of the clutch 44 will be described below.

As illustrated in Fig. 2, the clutch 44 includes a clutch boss 441, a clutch housing 442, and a pressure plate 450. The clutch housing 442 is formed to surround the clutch boss 441. The main shaft 41 is rotatably attached to the clutch housing 442. The clutch boss 441 is fixed to the main shaft 41. Thus, the clutch boss 441, together with the main shaft 41, rotates.

A plurality of friction plates (driving plates) 452 is arranged inside the clutch housing 442 so as to line up in the axial direction of the main shaft 41. The plurality of friction plates 452 is fixed to the clutch housing 442 in the rotational direction of the main shaft 41. Therefore, the plurality of friction plates 452, together with the clutch housing 442, rotates. Each of the friction plates 452 is displaceable in the axial direction of the main shaft 41. This makes the distance between the adjacent friction plates 452 variable.

A clutch plate (driven plate) 453 is arranged between the adjacent friction plates 452. Each of the clutch plates 453 is opposed to the adjacent friction plate 452. Each of the clutch plates 453 is fixed to the clutch boss 441 in the rotational direction of the main shaft 41. Therefore, the plurality of clutch plates 453, together with the clutch boss 441, rotates. Each of the clutch plates 453 is displaceable in the axial direction of the main shaft 41. This makes the distance between the adjacent clutch plates 453 variable.

The rotation of the crank shaft 25 causes the clutch housing 442 to rotate. When the clutch 44 is in the engaged state, as described below, the friction plate 452 and the clutch plate 453 are pressed against each other. Therefore, the rotation of the crank shaft 25 is transmitted to the clutch boss 441 so that the clutch boss 441 rotates. In the present preferred embodiment, the friction plate 452 fixed to the clutch housing 442 in the rotational direction of the main shaft 41 is a driving plate. The clutch plate 453 fixed to the clutch boss 441 in the rotational direction of the main shaft 41 is a driven plate.

The pressure plate 450 has a substantially disk shape, and is arranged outside one end of the main shaft 41. The pressure plate 450 is attached to the clutch housing 442 such that the pressure plate 450, together with the clutch housing 442, rotates. The pressure plate 450 moves in the axial direction of the main shaft 41 so that the friction plate 452 and the clutch plate 453 come into contact with and separate from each other.

A belleville spring 451 having a substantially annular shape is interposed between the clutch housing 442 and the pressure plate 450. The belleville spring 451 urges the pressure plate 450 in the direction in which the friction plate 452 and the clutch plate 453 come into contact with each other. A push mechanism 471 is attached to the center of the pressure plate 450. A part of the push mechanism 471 is inserted into the main shaft 41.

The clutch 44 is provided with a clutch release mechanism 86. The clutch actuator 60 drives the clutch release mechanism 86. The clutch release mechanism 86 has a push rod 86a. The push rod 86a of the clutch release mechanism 86 is inserted into the main shaft 41.

When the clutch release mechanism 86 operates, the push rod 86a and the push mechanism 471 move nearer to the belleville spring 451. Thus, the pressure plate 450 moves outward (rightward in Fig. 2) against an urging force of the belleville spring 451. As a result, the friction plate 452 and the clutch plate 453 separate from each other so that the clutch 44 enters the disengaged state.

The engaged state of the clutch 44 means a state where the friction plate 452 and the clutch plate 453 in the clutch 44 come into contact with each other to integrally rotate.

The disengaged state of the clutch 44 means a state where the friction plate 452 and the clutch plate 453 in the clutch 44 separate from each other. A state where the friction plate 452 and the clutch plate 453 rotate at different speeds while coming into contact with each other is referred to as a half-clutched state. The clutch 44 is shifted from the disengaged state to the engaged state via the half-clutched state.

The configuration of the transmission 43 will be then described. In the present preferred embodiment, the transmission 43 is a normally engaged dog transmission. The transmission 43 has a plurality of gear positions.

A plurality of transmission gears 49 is attached to the main shaft 41. A plurality of transmission gears 420 corresponding to the plurality of transmission gears 49 is attached to the drive shaft 42. Only the transmission gears 49 and 420, which form a pair, respectively selected out of the plurality of transmission gears 49 and the plurality of transmission gears 420 engage with each other. At least one of the unselected transmission gear 49 and the unselected transmission gear 420 is rotatable with respect to the main shaft 41 or the drive shaft 42. The transmission of the torque between the main shaft 41 and the drive shaft 42 is performed only via the selected pair of transmission gears 49 and 420.

A shift cam 421 selects the pair of transmission gears 49 and 420. A plurality of cam grooves 421 a is formed on an outer peripheral surface of the shift cam 421. A plurality of shift forks 422 is mounted on the plurality of cam grooves 421 a. Each of the shift forks 422 engages with any of the transmission gears 49 of the main shaft 41 and any one of the transmission gears 420 of the drive shaft 42. The shift cam 421 rotates so that each of the plurality of shift forks 422 is guided by the cam groove 421a to move in the axial direction of the main shaft 41. Thus, the pair of transmission gears 49 and 420 that engage with each other is selected. In such a way, the gear position of the transmission 43 is determined.

The shift actuator 70 operates so that a shift rod 75 moves back and forth. The shift cam 421 rotates through a predetermined angle at a time by the reciprocating movement of the shift rod 75.

When the clutch 44 is in the engaged state, as described above, the torque generated by the engine 45 is transmitted to the main shaft 41 via the clutch 44. Furthermore, the torque transmitted to the main shaft 41 is transmitted to the drive shaft 42 via the selected pair of transmission gears 49 and 420, so that the drive shaft 42 rotates. In this case, the rotation is transmitted at a change gear ratio determined by a gear ratio of the selected pair of transmission gears 49 and 420. A power transmission mechanism 47 illustrated in Fig. 1 connects the drive shaft 42 to the rear wheel 23 illustrated in Fig. 1. The torque transmitted to the drive shaft 42 is transmitted to the rear wheel 23 via the power transmission mechanism 47 so that the rear wheel 23 rotates. The power transmission mechanism 47 may be a chain, a belt, or a drive shaft.

Fig. 3 is a block diagram mainly illustrating the configuration of the shift change instruction apparatus (gear change instruction apparatus) 50.

As illustrated in Fig. 3, the motorcycle 1 includes a display panel (notifier) 15, an electric control unit (estimator, determiner, calculator) (ECU) 90, a power supply device 73, a main switch 74, an engine rotational speed sensor (first rotational speed acquirer) 31, a shift position sensor (gear position detector) 32, a vehicle speed sensor 33 (32 and 33 forming a second rotational speed acquirer), and a temperature sensor 34.

The ECU 90 includes a central processing unit (CPU) 91, a random access memory (RAM) 92, a read-only memory (ROM) 93, and an interface circuit 95. When a rider (operator of the gear change instruction apparatus 50/the vehicle/the motorcycle 1) turns the main switch 74 on, power is supplied from the power supply device 73 to the ECU 90 so that the ECU 90 is operable.

The motorcycle 1 may include a relay switch (not illustrated). In this case, a part of the ECU 90 can be operated even when the main switch 74 is not turned on.

The engine rotational speed sensor 31 is provided in the crank shaft 25 (Fig. 2), for example, to detect the rotational speed of the crank shaft 25. The shift position sensor 32 detects the rotation angle of the shift cam 421 (Fig. 2), to detect the gear position of the transmission 43. The vehicle speed sensor 33 detects the vehicle speed (traveling speed) of the motorcycle 1. The temperature sensor 34 detects the temperature of radiator cooling water (hereinafter abbreviated as water temperature).

The sensors 31 to 34 may directly or indirectly detect a physical quantity to be detected. Alternatively, the sensors 31 to 34 may have an operating function, and may calculate a required physical quantity from the detected physical quantity.

The ECU 90 controls the clutch actuator 60 and the shift actuator 70. The clutch actuator 60 is provided with a potentiometer 38, and the shift actuator 70 is provided with a potentiometer 39. The potentiometer 38 detects the rotation angle of the clutch actuator 60, to detect the driving amount of the clutch actuator 60. The potentiometer 39 detects the rotation angle of the shift actuator 70, to detect the driving amount of the shift actuator 70.

In the present preferred embodiment, the display panel 15, the ECU 90, the engine rotational speed sensor 31, the shift position sensor 32, the vehicle speed sensor 33, the clutch actuator 60, and the potentiometer 38 constitute the shift change instruction apparatus (gear change instruction apparatus) 50.

The driving amount of the clutch actuator 60 in a case where the clutch 44 is shifted from the engaged state to the disengaged state and a case where the clutch 44 is shifted from the disengaged state to the engaged state is previously determined. Therefore, the ECU 90 can determine whether the clutch 44 is in the engaged state or the disengaged state based on the detected value of the potentiometer 38.

The ECU 90 controls the clutch actuator 60 and the shift actuator 70, to carry out transmission control. The transmission control means a series of control such as switching to the engaged state of the clutch 44, a change in the gear position of the transmission 43, and switching to the engaged state of the clutch 44.

The ECU 90 is switchable to a manual control mode in which transmission control is carried out based on the operation of the shift switch 72 and an automatic control mode in which transmission control is automatically carried out. The ECU 90 selectively carries out transmission control in the transmission control mode and transmission control in the automatic control mode.

A mode selecting switch 71 is operated by the rider of the motorcycle 1 to switch the manual control mode and the automatic control mode. The shift switch 72 includes an up-shift switch 72a and a down-shift switch 72b. The up-shift switch 72a is operated by the rider to generate an instruction for up-shifting. The down-shift switch 72b is operated by the rider to generate an instruction for down-shifting.

In the manual control mode, the ECU 90 controls the clutch actuator 60 and the shift actuator 70 so as to perform up-shifting or down-shifting in response to the instruction from the shift switch 72. In the automatic control mode, the ECU 90 controls the clutch actuator 60 and the shift actuator 70 so as to perform up-shifting or down-shifting when the driving state satisfies predetermined driving conditions.

The driving state includes the vehicle speed of the motorcycle 1 and the operating state of the engine 45, for example, the vehicle speed and the accelerator opening of the motorcycle 1.

In the manual control mode, when the rider turns the up-shift switch 72a on, the ECU 90 is instructed to perform up-shifting. Thus, the ECU 90 controls the clutch actuator 60 and the shift actuator 70 to perform up-shifting only except in a case where the gear position of the transmission 43 is the uppermost gear position.

In the manual control mode, when the rider turns the down-shift switch 72b on, the ECU 90 is instructed to perform up-shifting. Thus, the ECU 90 controls the clutch actuator 60 and the shift actuator 70 to perform down-shifting only except in a case where the gear position of the transmission 43 is the lowermost gear position.

In the automatic control mode, when the driving state satisfies previously set up-shifting conditions, the ECU 90 controls the clutch actuator 60 and the shift actuator 70, to perform up-shifting.

In the automatic control mode, when the driving state satisfies previously set down-shifting conditions, the ECU 90 controls the clutch actuator 60 and the shift actuator 70, to perform down-shifting.

The ECU 90 mainly performs shift change instruction processing (gear change instruction processing), described below, in the manual control mode.

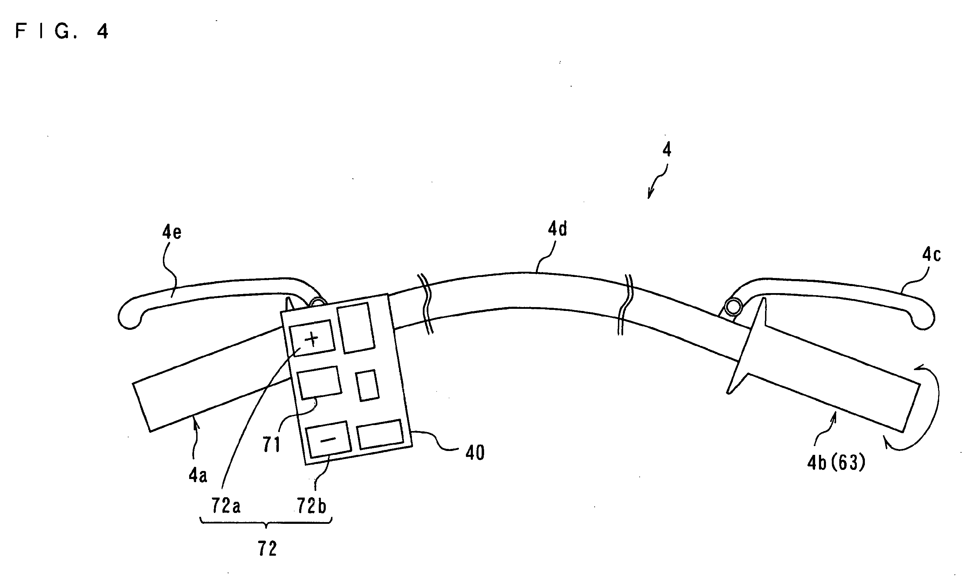

Fig. 4 is a schematic view illustrating the schematic configuration of a handle of the motorcycle 1.

As illustrated in Fig. 4, the handle 4 includes a handle bar 4d, a left grip 4a, and a right grip 4b. The right grip 4b forms the accelerator 63, and is rotatable within a predetermined angle range. The accelerator 63 is operated so that an output of the engine 45 is adjusted. The handle 4 is provided with a front brake lever 4c and a rear brake lever 4e. A switch panel 40 is provided at the left of the handle bar 4d. The switch panel 40 may be provided at the right of the handle bar 4d.

The mode selecting switch 71 is provided at the front of the switch panel 40, for example. The mode selecting switch 71 is composed of a push button, for example. Every time the mode selecting switch 71 is switched, the ECU 90 is switched from the automatic control mode to the manual control mode, or is switched from the manual control model to the automatic control mode. The mode selecting switch 71 is not limited to the push button. The mode selecting switch 71 may be a slidable switch, for example. In this case, when the slidable mode selecting switch 71 is positioned at the left, for example, the ECU 90 carries out transmission control in the manual control mode. When the slidable mode selecting switch 71 is positioned at the right, for example, the ECU 90 carries out transmission control in the automatic control mode.

The switch panel 40 is provided with a shift switch 72. The shift switch 72 includes an up-shift switch 72a and a down-shift switch 72b.

The up-shift switch 72a and the down-shift switch 72b are turned on with the ECU 90 being in the automatic control mode so that the control mode of the ECU 90 may be switched to the manual control mode. In this case, the shift switch 72 functions as a mode selecting switch.

### (a) Operation of ECU 90

The ECU 90 illustrated in Fig. 3 estimates a calorific value by friction between the friction plate 452 and the clutch plate 453 in the clutch 44 in the following method.

The ECU 90 estimates the rotational speed of the friction plate 452 in the clutch 44 based on the rotational speed of the crank shaft 25 detected by the engine rotational speed sensor 31. The ECU 90 estimates the rotational speed of the clutch plate 453 in the clutch 44 based on the rotation angle of the shift cam 421 detected by the shift position sensor 32 and the vehicle speed detected by the vehicle speed sensor 33.

Furthermore, the ECU 90 calculates a difference between the estimated rotational speed of the friction plate 452 and the estimated rotational speed of the clutch plate 453. This causes a difference between the rotational speeds of the friction plate 452 and the clutch plate 453 in the clutch 44 (hereinafter referred to as a rotational speed difference) to be detected. The rotational speed difference is a calculated value or an estimated value, and varies according to the traveling state of the motorcycle 1.

The ECU 90 calculates a time-integrated value of the rotational speed difference, and estimates a calorific value in the clutch 44 based on the time-integrated value of the rotational speed difference.

Heat generation in the clutch 44 is to increase the friction between the friction plate 452 and the clutch plate 453 by the occurrence of the rotational speed difference and to increase the calorific value in the clutch 44. The calorific value in the clutch 44 is represented as a function including the time-integrated value of the rotational speed difference and a predetermined coefficient. The predetermined coefficient is a value obtained by an experiment, for example.

Therefore, the calorific value in the clutch 44 can be estimated based on a period during which the rotational speed difference occurs between the friction plate 452 and the clutch plate 453 and an absolute value of the rotational speed difference. In this case, the calorific value in the clutch 44 can be estimated with higher accuracy than when the calorific value in the clutch 44 is detected or estimated without using the rotational speed difference. The calorific value in the clutch 44 estimated by the ECU 90 is hereinafter designated as an estimated calorific value Qe. The estimated calorific value Qe is a function including at least the rotational speed difference and time.

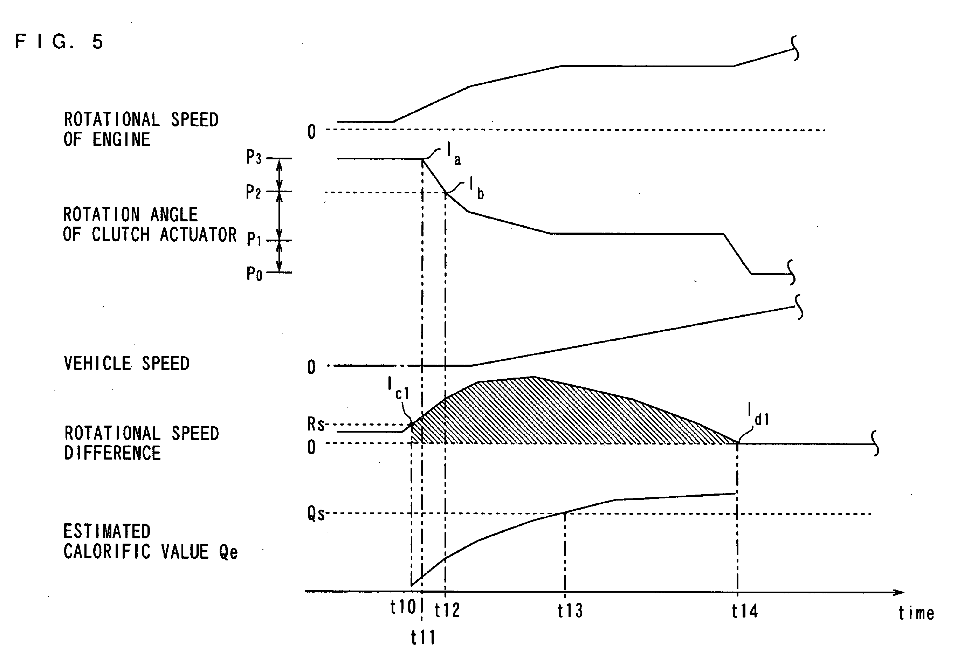

Fig. 5 is a timing chart illustrating processing for estimating the calorific value in the clutch 44 at the start of the motorcycle 1. Fig. 5 illustrates a change in the rotational speed of the engine 45 (the rotational speed of the crank shaft 25) detected by the engine rotational speed sensor 31, a change in the rotation angle of the clutch actuator 2, a change in the traveling speed of the motorcycle 1, a change in the rotational speed difference, and the estimated calorific value Qe, respectively, in its uppermost stage, second stage, third stage, fourth stage, and lowermost stage. In Fig. 5, a horizontal axis represents time.

When the rotation angle of the clutch actuator 60 is not less than P₀ nor more than P₁, the clutch 44 is in the engaged state. When the rotation angle of the clutch actuator 60 is not less than P₂ nor more than P₃, the clutch 44 is in the disengaged state. When the rotation angle of the clutch actuator 60 is more than P₁ and less than P₂, the clutch 44 is in the half-clutched state.

Fig. 5 illustrates a case where the rider starts the motorcycle 1 with the gear position of the transmission 43 being higher than the first gear position. First, the clutch 44 is in the disengaged state, and the friction plate 452 and the clutch plate 453 are spaced apart from each other. This causes the rotational speed difference to be kept constant. The rotational speed of the engine 45 gradually increases. This causes the rotational speed difference to gradually increase. At a time point t₁₀, the rotational speed difference reaches a reference rotational speed difference (third value) Rs.

Then, the friction plate 452 and the pressure plate 450 are driven by the clutch actuator 60 so as to come closer to each other. The friction plate 452 and the clutch plate 453 start to move relatively nearer to each other at a time point t₁₁, as indicated by a symbol Iₐ. Furthermore, the friction plate 452 and the clutch plate 453 start to come into contact with each other at a time point t₁₂, as indicated by a symbol I_{b}. More specifically, the half-clutched state is started at a time point t₁₂.

In this case, the gear position of the transmission 43 is higher than the first gear position. Therefore, the rider attempts to maintain the clutch 44 in the half-clutched state for a relatively long time such that no engine stall occurs. The rotational speed difference increases as the rotational speed of the engine 45 increases. The rotational speed difference gradually decreases after reaching its maximum. Therefore, the clutch 44 is shifted from the half-clutched state to the engaged state.

The ECU 90 calculates the estimated calorific value Qe by time-integrating the rotational speed difference in a period of time from predetermined start to predetermined end.

In this example, the ECU 90 starts to time-integrate the rotational speed difference at the time point t₁₀ where the rotational speed difference reaches the reference rotational speed difference Rs, and continues to calculate the estimated calorific value Qe. At a time point t₁₃, the estimated calorific value Qe reaches a reference calorific value Qs, and further gradually increases. When the clutch 44 enters the engaged state, the ECU 90 finishes time-integrating the rotational speed difference at a time point t₁₄ where the rotational speed difference reaches substantially zero, as indicated by a symbol I_{d1}

When the clutch 44 is in the engaged state, the friction plate 452 and the clutch plate 453 do not relatively rotate. Even in such a case, the actual rotational speed difference does not reach zero due to the effect of backlash or the like produced between a driving part and a driven part of the clutch 44. Thus, the ECU 90 finishes time-integrating the rotational speed difference when the rotational speed difference reaches substantially zero. For example, the ECU 90 determines that the rotational speed difference reaches substantially zero when the absolute value of the rotational speed difference becomes less than a predetermined value. Alternatively, the ECU 90 determines that the rotational speed difference reaches substantially zero when the ratio of the rotational speed difference to the rotational speed of the friction plate 452 or the clutch plate 453 becomes less than a predetermined value.

In this example, the time integration of the rotational speed difference is started at the time point where the calorific value by the friction between the friction plate 452 and the clutch plate 453 starts to increase. This results in an improvement in the estimation accuracy of the calorific value.

The time integration of the rotational speed difference is terminated at the time point where no heat is generated by the friction between the friction plate 452 and the clutch plate 453. This results in an improvement in the estimation accuracy of the calorific value.

The ECU 90 may start to time-integrate the rotational speed difference at the time point t₁₁ where the friction plate 452 and the clutch plate 453 start to move relatively nearer to each other. In this case, the ECU 90 can determine the time point where the time integration of the rotational speed difference is started easily and stably. The need to calculate the rotational speed difference is eliminated to determine the time point where the time integration of the rotational speed difference is started.

Alternatively, the ECU 90 may start to time-integrate the rotational speed difference at the time point t₁₂ where the half-clutched state is started. In this case, the ECU 90 can easily and stably determine the time point where the time integration of the rotational speed difference is started. The ECU 90 can start to time-integrate the rotational speed difference at the time point where the heat generation by the friction between the friction plate 452 and the clutch plate 453 is started. This results in an improvement in the estimation accuracy of the calorific value.

In a state where the gear position of the transmission 43 is higher than a gear position suitable for the traveling speed of the motorcycle 1 while the motorcycle 1 is traveling, the rider also attempts to maintain the clutch 44 in the half-clutched state such that no engine stall occurs. In this case, the ECU 90 calculates the estimated calorific value Qe by time-integrating the rotational speed difference in a period of time from predetermined start to predetermined end, as in the above-mentioned case.

More specifically, the ECU 90 starts to time-integrate the rotational speed difference at the time point where the rotational speed difference reaches the reference rotational speed difference Rs, the time point where the friction plate 452 and the clutch plate 453 start to move relatively nearer to each other, or the time point where the half-clutched state is started. The ECU 90 finishes time-integrating the rotational speed difference at the time point where the rotational speed difference reaches substantially zero.

The ECU 90 estimates the temperature of the clutch 44 in the following method. The ECU 90 calculates a first estimated temperature To based on at least the water temperature detected by the temperature sensor 34 and a first coefficient. The first estimated temperature T₀ is represented by a function including the water temperature and the first coefficient. The first coefficient is stored in the RAM 92 or the ROM 93 in the ECU 90 illustrated in Fig. 3, for example. The first coefficient may be a constant or a variable. For example, the ECU 90 calculates the first estimated temperature To by multiplying or adding the water temperature and the first coefficient together.

The ECU 90 calculates a second estimated temperature Te serving as the temperature of the clutch 44 (hereinafter referred to as an estimated clutch temperature) based on at least the estimated calorific value Qe, the water temperature detected by the temperature sensor 34, and a second coefficient while the estimated calorific value Qe is calculated. The estimated clutch temperature Te is represented by a function including the estimated calorific value Qe, the water temperature, and the second coefficient. Alternatively, the estimated clutch temperature Te is represented by a function including the estimated calorific value Qe and the first estimated temperature To. The second coefficient is stored in the RAM 92 or the ROM 93 in the ECU 90 illustrated in Fig. 3, for example. The second coefficient may be a constant or a variable. For example, the ECU 90 calculates the estimated clutch temperature Te by multiplying or adding the estimated calorific value Qe, the water temperature, and the second coefficient together.

The clutch 44 hardly generates frictional heat in a period during which the estimated calorific value Qe is not calculated, i.e., a period during which the rotational speed difference is substantially zero. Therefore, the temperature of the clutch 44 gradually decreases when the rotational speed difference reaches substantially zero after being the reference rotational speed difference Rs or more. When the period during which the rotational speed difference is substantially zero is continued for a long time, the estimated clutch temperature Te decreases to the first estimated temperature To. On the other hand, when the period during which the rotational speed difference is substantially zero is short, the estimated clutch temperature Te increases again before decreasing to the first estimated temperature To.

The ECU 90 gradually decreases the estimated clutch temperature Te to the first estimated temperature To with a predetermined time gradient while the estimated calorific value Qe is not calculated, i.e., when the rotational speed difference reaches substantially zero. The predetermined temperature gradient may be a predetermined value. The predetermined temperature gradient is stored in the RAM 92 or the ROM 93 in the ECU 90 illustrated in Fig. 3, for example. The predetermined temperature gradient may be changed based on a difference between the estimated clutch temperature Te and the first estimated temperature To.

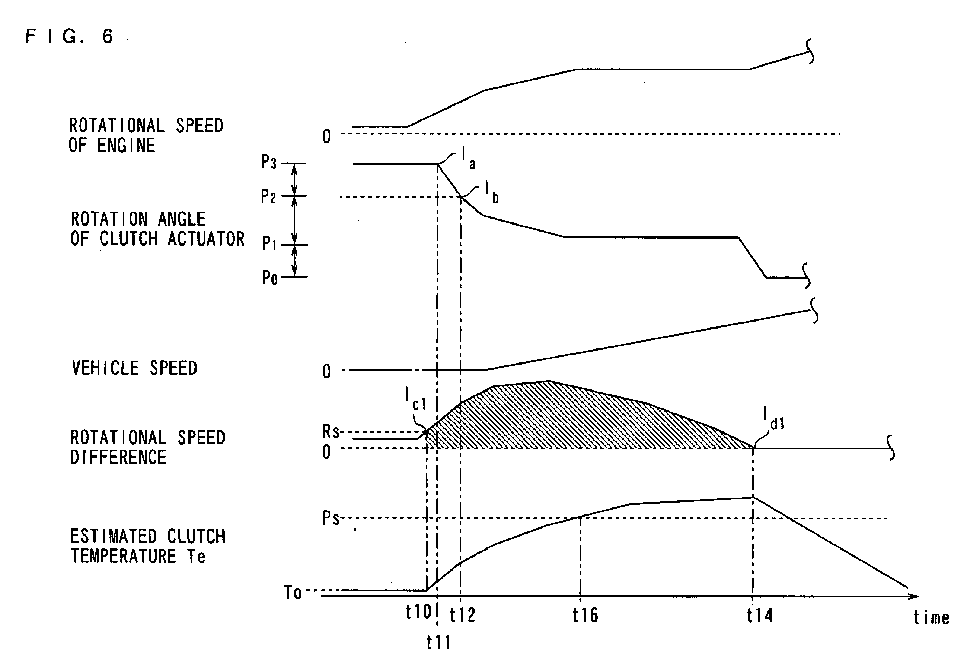

Fig. 6 is a timing chart illustrating processing for estimating the temperature of the clutch 44 at the start of the motorcycle 1. Fig. 6 illustrates a change in the rotational speed of the engine 45, a change in the rotation angle of the clutch actuator 2, a change in the traveling speed of the motorcycle 1, a change in the rotational speed difference, and the estimated clutch temperature Te, respectively, in its uppermost stage, second stage, third stage, fourth stage, and lowermost stage. In Fig. 6, a horizontal axis represents time.

The interior temperature of the clutch 44 is calculated as the estimated clutch temperature Te illustrated in Fig. 6 based on the estimated calorific value Qe illustrated in Fig. 5. The estimated clutch temperature Te increases by the increase in the estimated calorific value Qe due to the rotational speed difference, while decreasing by the decrease in the estimated calorific value Qe. When the estimated clutch temperature Te gradually decreases to the first estimated temperature To after the rotational speed difference reaches substantially zero.

In a first example of shift change instruction processing (gear change instruction processing), described below, the ECU 90 compares the estimated calorific value Qe with the reference calorific value Qs, and determines whether a notification for urging the rider of the motorcycle 1 to perform down-shifting (hereinafter referred to as a down-shifting notification) is required based on the result of the comparison. The ECU 90 makes, if it determines that the down-shifting notification is required, the down-shifting notification by the display panel 15. In this case, the reference calorific value Qs is stored in the RAM 92 or the ROM 93.

In a second example of shift change instruction processing (gear change instruction processing), described below, the ECU 90 compares the estimated clutch temperature Te with the reference clutch temperature (predetermined second value) Ps, and determines whether a down-shifting notification is required based on the result of the comparison. The ECU 90 makes, if it determines that the down-shifting notification is required, the down-shifting notification by the display panel 15. In this case, the reference clutch temperature Ps is stored in the RAM 92 or the ROM 93.

### (b) Down-shifting notification by display panel 15

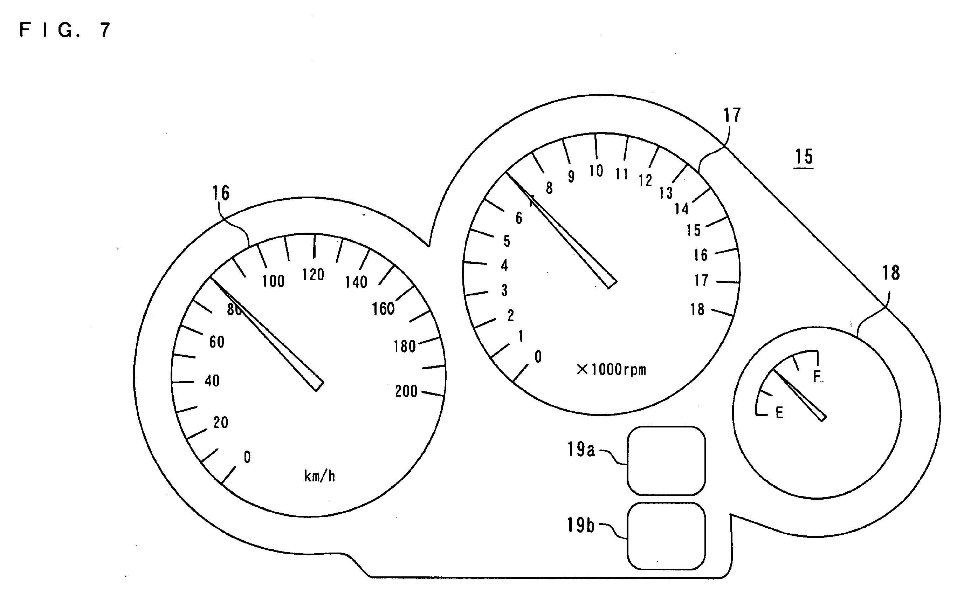

Fig. 7 is a schematic view illustrating the display panel 15. As illustrated in Fig. 7, the display panel 15 is provided with an indicating lamp 11, a speed meter 16, an engine tachometer 17, a fuelometer 18, an up-shift indicating lamp 19a, and a down-shift indicating lamp 19.

As illustrated in Fig. 1, the display panel 15 is provided in a vehicle body 100 inside a front cowl 24. The rider can easily view the display panel 15 with the rider sitting on a seat 14. The configuration of the display panel 15 is not limited to the configuration illustrated in Fig. 7.

When the ECU 90 determines that the transmission 43 must be up-shifted while the motorcycle 1 is traveling, the up-shift indicating lamp 19a lights or flickers to urge the rider to perform up-shifting. When the ECU 90 determines that the transmission 43 must be down-shifted while the motorcycle 1 is traveling, the down-shift indicating lamp 19b lights or flickers to urge the rider to perform down-shifting. This allows the rider to recognize the most suitable timing of a shift change (gear change).

The display panel 15 may be provided with a liquid crystal display for making display for urging the rider to perform up-shifting or down-shifting. In this case, the display for urging up-shifting and the display for urging down-shifting differ from each other.

In the first example of the shift change instruction processing, the ECU 90 makes the down-shifting notification by turning the down-shift indicating lamp 19b on when the estimated calorific value Qe is the reference calorific value Qs or more. This urges the rider to perform down-shifting. When the rider turns the down-shift switch 72b on to perform down-shifting, the ECU 90 terminates the down-shifting notification by turning the down-shift indicating lamp 19b off.

In the example illustrated in Fig. 5, the down-shift indicating lamp 19b lights at a time point t₁₃. The down-shift indicating lamp 19b may flicker to make the down-shifting notification.

Even if the rotational speed difference occurs, the down-shift indicating lamp 19b does not light when the estimated calorific value Qe does not become the reference calorific value Qs or more. If the rotational speed difference is relatively small or if a period of time during which the rotational speed difference occurs is relatively short, for example, the estimated calorific value Qe does not become the reference calorific value Qs or more.

In the second example of the shift change instruction processing, the ECU 90 makes the down-shifting notification by turning the down-shift indicating lamp 19b on when the estimated clutch temperature Te is the reference clutch temperature Ps or more. This urges the rider to perform down-shifting. When the rider turns the down-shift switch 72b on to perform down-shifting, the ECU 90 terminates the down-shifting notification by turning the down-shift indicating lamp 19b off.

In the example illustrated in Fig. 6, the down-shift indicating lamp 19b lights at a time point t₁₆. The down-shift indicating lamp 19b may flicker to make the down-shifting notification.

Even if the rotational speed difference occurs, the down-shift indicating lamp 19b does not light when the estimated clutch temperature Te does not become the reference clutch temperature Ps or more. If the rotational speed difference is relatively small or if a period of time during which the rotational speed difference occurs is relatively short, for example, the estimated clutch temperature Te does not become the reference clutch temperature Ps or more.

### (c) Shift change instruction processing (gear change instruction processing) by ECU 90

The ROM 93 in the ECU 90 stores a shift change instruction processing program (gear change instruction processing program) for performing shift change instruction processing. The CPU 91 in the ECU 90 executes the shift change instruction processing program, to perform the following shift change instruction processing.

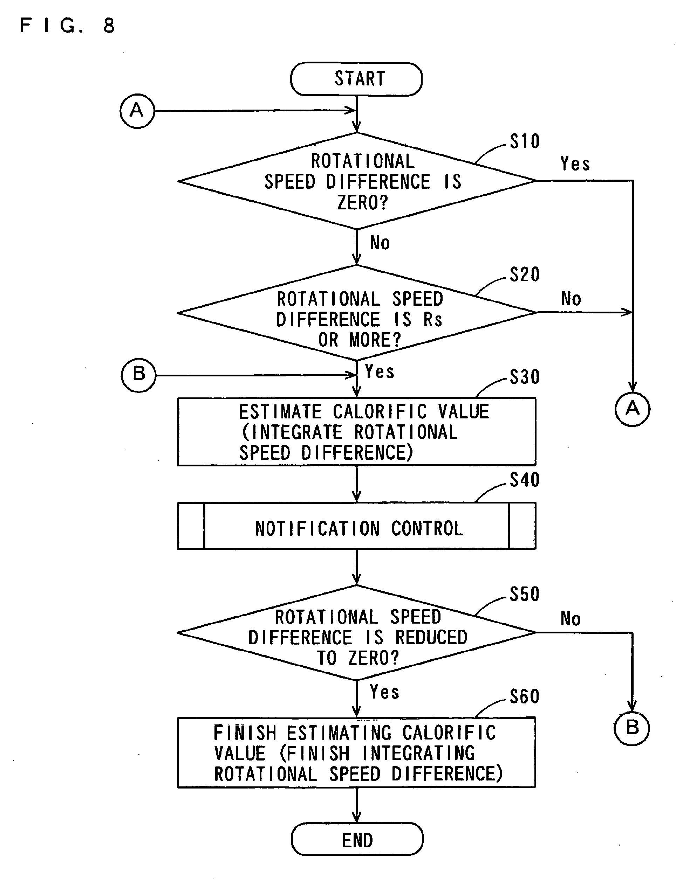

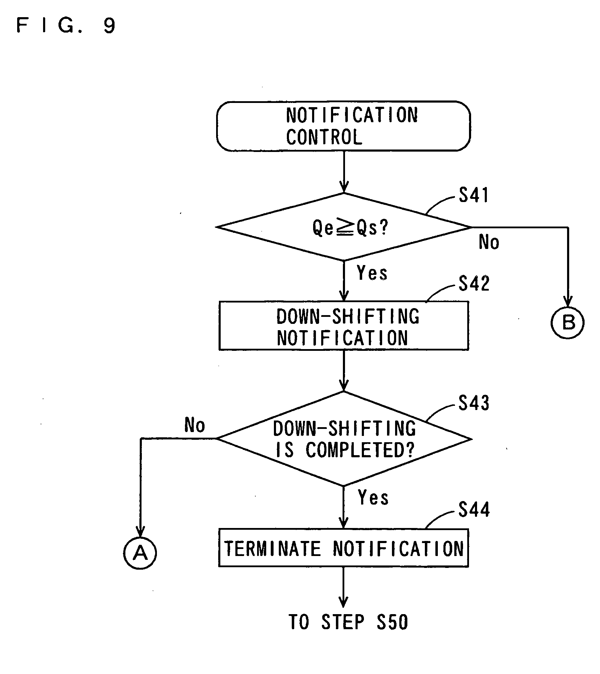

Fig. 8 is a flowchart illustrating the first example of the shift change instruction processing by the CPU 91 in the ECU 90. Fig. 9 is a flowchart illustrating notification control by the CPU 91 in the ECU 90.

In step S10, the CPU 91 determines whether or not a rotational speed difference is substantially zero. If the rotational speed difference is substantially zero (YES in step S10), the processing in step S10 is repeated.

If the rotational speed difference is not substantially zero (NO in step S10), then in step S20, the CPU 91 determines whether or not the rotational speed difference is a reference rotational speed difference Rs or more. If the rotational speed difference is less than the reference rotational speed difference Rs (NO in step S20), the processing is returned to step S10.

If the rotational speed difference is the reference rotational speed difference Rs or more (YES in step S20), then in step S30, the CPU 91 estimates a calorific value by time-integrating the rotational speed difference. Thus, an estimated calorific value Qe is calculated.

When the rotational speed difference becomes the reference rotational speed difference Rs or more, therefore, the time integration of the rotational speed difference is started. As illustrated in Fig. 5, the time integration of the rotational speed difference may be started at the time point where the shift of the clutch 44 from a disengaged state to an engaged state is started or the time point where a half-clutched state of the clutch 44 is started.

In step S40, the CPU 91 then performs notification control. The notification control means control for making a down-shifting notification. The processing in step S30 and the processing in step S40 may be performed in parallel.

In step S41, the CPU 91 determines whether or not the estimated calorific value Qe is a reference calorific value Qs or more in the notification control, as illustrated in Fig. 9. If the estimated calorific value Qe is less than the reference calorific value Qs (NO in step S41), the processing is returned to step S8 illustrated in Fig. 8.

If the estimated calorific value Qe is the reference calorific value Qs or more (YES in step S41), then in step S42, the CPU 91 makes the down-shifting notification by the display panel 15. Thus, the down-shift indicating lamp 19b lights.

The rider turns the down-shift switch 72b on when he/she views the down-shift indicating lamp 19b. Thus, the CPU 91 operates the shift actuator 70, to start down-shifting for changing the gear position of the transmission 43 to the preceding gear position.

In step S43, the CPU 91 then determines whether or not the down-shifting by the shift actuator 70 is completed. If the down-shifting is not completed (NO in step S43), the processing is returned to step S10 illustrated in Fig. 8.

If the down-shifting is completed (YES in step S43), then in step S44, the CPU 91 terminates the down-shifting notification. Thus, the down-shift indicating lamp 19b goes out. At this time, the CPU 91 operates the clutch actuator 60, to shift the clutch 44 from the half-clutched state to the engaged state. As a result, the rotational speed difference decreases. Then, the processing proceeds to step S50 illustrated in Fig. 8.

In step S50, the CPU 91 determines whether or not the rotational speed difference decreases to substantially zero. Unless the rotational speed difference decreases to substantially zero (NO in step S50), the processing is returned to step S30.

If the rotational speed difference decreases to substantially zero (YES in step S50), then in step S60, the CPU 91 finishes time-integrating the rotational speed difference, to finish estimating the calorific value.

Thus, in the shift change instruction apparatus 50 according to the present preferred embodiment, the calorific value in the clutch 44 is estimated in a period of time elapsed since the rotational speed difference became the reference rotational speed difference Rs or more until the rotational speed difference decreases to substantially zero.

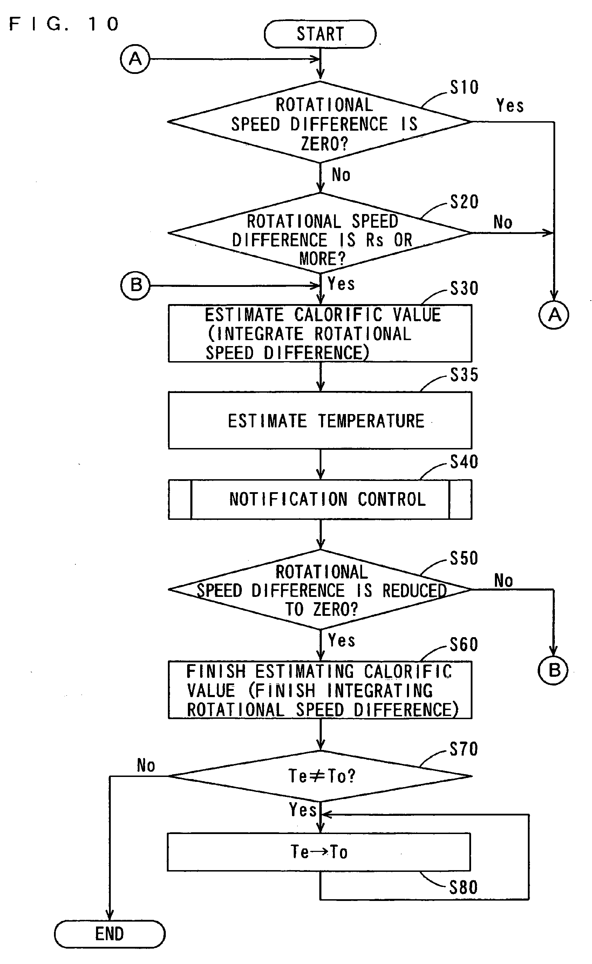

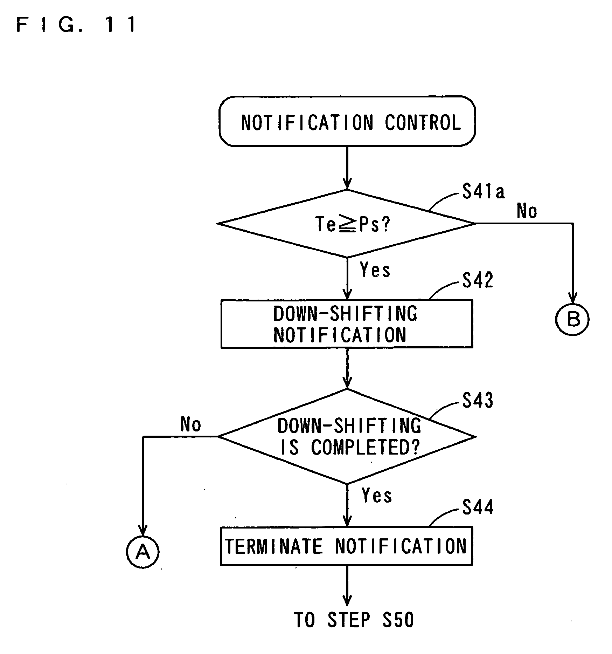

Fig. 10 is a flowchart illustrating the second example of the shift change instruction processing (gear change instruction processing) by the CPU 91 in the ECU 90. Fig. 11 is a flowchart illustrating notification control by the CPU 91 in the ECU 90.

Processing in steps S10, S20, and S30 illustrated in Fig. 10 is the same as the processing in steps S10, S20, and S30 illustrated in Fig. 8. In step S35, the CPU 91 estimates a temperature based on an estimated calorific value Qe after estimating the calorific value in step S30. Thus, an estimated clutch temperature Te is calculated. In step 40, the CPU 91 then carries out the notification control.

In step S41a, the CPU 91 determines whether or not the estimated clutch temperature Te is a reference clutch temperature Ps or more in the notification control, as illustrated in Fig. 11. If the estimated clutch temperature Te is less than the reference clutch temperature Ps (NO in step S41 a), the processing is returned to step S30 illustrated in Fig. 10.

If the estimated clutch temperature Te is the reference clutch temperature Ps or more (YES in step S41 a), then in step S42, the CPU 91 makes a down-shifting notification by the display panel 15. Thus, the down-shift indicating lamp 19b lights.

The rider turns the down-shift switch 72b on when he/she views the down-shift indicating lamp 19b. Thus, the CPU 91 operates the shift actuator 70, to start down-shifting for changing the gear position of the transmission 43 to the preceding gear position.

In step S43, the CPU 91 then determines whether or not the down-shifting by the shift actuator 70 is completed. If the down-shifting is not completed (NO in step S43), the processing is returned to step S10 illustrated in Fig. 10.

If the down-shifting is completed (YES in step S43), then in step S44, the CPU 91 terminates the down-shifting notification. Thus, the down-shift indicating lamp 19b goes out. At this time, the CPU 91 operates the clutch actuator 60, to shift the clutch 44 from a half-clutched state to an engaged state. As a result, the rotational speed difference decreases. Then, the processing proceeds to step S50 illustrated in Fig. 10.

In step S50, the CPU 91 determines whether or not the rotational speed difference decreases to substantially zero. Unless the rotational speed difference decreases to substantially zero (NO in step S50), the processing is returned to step S30.

If the rotational speed difference decreases to substantially zero (YES in step S50), then in step S60, the CPU 91 finishes time-integrating the rotational speed difference, to finish estimating the calorific value.

In step S70, the CPU 91 then determines whether or not the estimated clutch temperature Te differs from a first estimated temperature To. If the estimated clutch temperature Te is equal to the first estimated temperature To (NO in step S70), the processing is terminated.

If the estimated clutch temperature Te differs from the first estimated temperature To (YES in step S70), the CPU 91 gradually brings the estimated clutch temperature Te closer to the first estimated temperature To by a predetermined value at a time. Then, the processing is returned to step S70. The processing in step S70 is repeated until the estimated clutch temperature Te becomes equal to the first estimated temperature To. Thus, the estimated clutch temperature Te gradually decreases to the first estimated temperature To with a predetermined time gradient.

The shift change instruction apparatus 50 according to the present preferred embodiment may perform the shift change instruction processing in the first example. In this case, the shift change instruction processing in the first example is performed at each of the plurality of gear positions of the transmission 43.

The shift change instruction apparatus 50 according to the present preferred embodiment may perform the above-mentioned shift change instruction processing in the second example. In this case, the shift change instruction processing in the second example is performed at each of the plurality of gear positions of the transmission 43.

When the half-clutched state of the clutch 44 is continued for a long time, as described above, the interior temperature of the clutch 44 increases by frictional heat between the friction plate 452 and the clutch plate 453. Thus, the friction plate 452 and the clutch plate 453 expand due to the effect of heat. As a result, a meet point in the clutch 44 (a position where the friction plate 452 and the clutch plate 453 that are spaced apart from each other start to come into contact with each other) may be shifted.

Particularly, in the multiple disk friction clutch, a lot of friction plates 452 and a lot of clutch plates 453 are provided. Therefore, the calorific value is higher and heat dissipation characteristics are lower than in the single disk friction clutch. Therefore, in the multiple disk friction clutch, the meet point is more easily shifted by heat generation than in the single disk friction clutch. When the meet point is shifted, the accuracy in control of the clutch 44 by the ECU 90 and the clutch plate 453 may deteriorate.

In the shift change instruction apparatus 50 according to the present preferred embodiment, the ECU 90 estimates the calorific value by the friction between the friction plate 452 and the clutch plate 453 in the clutch 44, while determining whether or not the down-shifting of the transmission 43 is required based on the estimated calorific value. If it is determined that the down-shifting of the transmission 43 is required, the down-shifting notification for urging the rider of the motorcycle 1 to perform down-shifting is made by the display panel 15.

This enables the rider to quickly and reliably recognize that the transmission 43 should be down-shifted. Therefore, the rider can quickly down-shift the transmission 43. This prevents the clutch 44 from being maintained in the half-clutched state for a long time. This results in prevention of deterioration in the accuracy in control of the clutch 44 by the friction between the friction plate 452 and the clutch plate 453.

It is difficult to directly detect the calorific value in the clutch 44, and a sensor for detecting the calorific value is high in cost. In the shift change instruction apparatus 50 according to the present preferred embodiment, the calorific value is calculated based on the time integration of the difference between the rotational speed difference of the friction plate 452 and the rotational speed of the clutch plate 453. This enables the calorific value inside the clutch 44 to be estimated in a relatively simple configuration and at low cost.

In the shift change instruction processing in the first example, the presence or absence of thermal expansion of the friction plate 452 and the clutch plate 453 in the clutch 44 is estimated based on the estimated calorific value. In this case, the timing of urging the rider to perform down-shifting can be determined in a simple configuration.

The presence or absence of thermal expansion of the clutch 44 depends on the environmental temperature of the clutch 44. In the shift change instruction processing in the second example, the temperature of the clutch 44 is estimated based on the estimated calorific value and the detected temperature of the cooling water (environmental temperature), and the presence or absence of thermal expansion of the friction plate 452 and the clutch plate 453 in the clutch 44 is estimated based on the estimated calorific value. In this case, the presence or absence of thermal expansion of the friction plate 452 and the clutch plate 453 can be accurately estimated based on the temperature of the clutch 44. Even when the environmental temperature of the clutch 44 is changed, therefore, the timing of urging the rider to perform down-shifting can be appropriately determined.

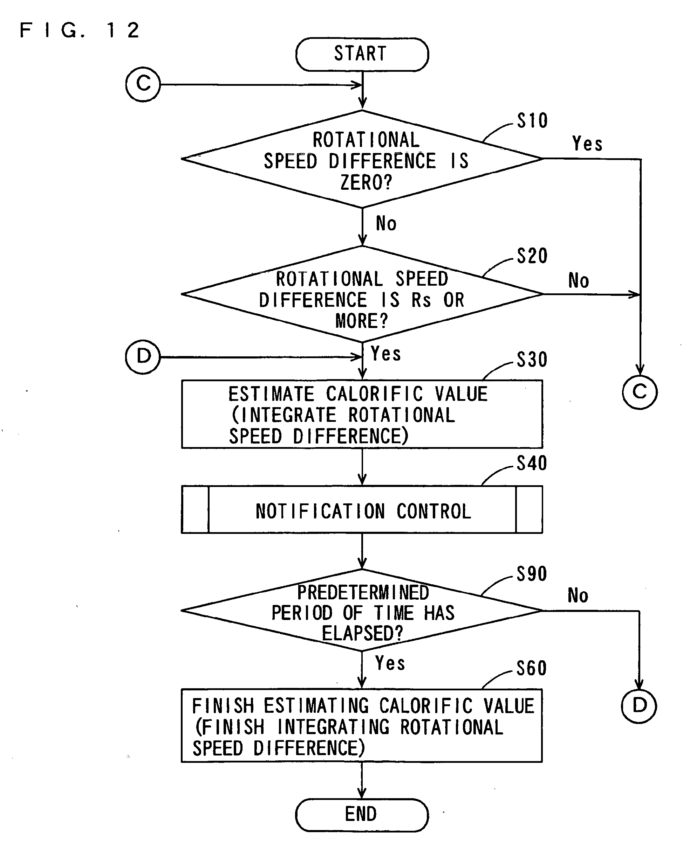

The shift change instruction processing in the first example or the shift change instruction processing in the second example is performed in each of the plurality of gear positions of the transmission 43. This prevents the rider from driving the motorcycle 1 for a long time with the clutch 44 maintained in the half-clutched state at the improper gear position when the motorcycle 1 is started and when the motorcycle 1 travels at any speed. This can reliably prevent deterioration in the accuracy in control of the clutch 44 by the friction between the friction plate 452 and the clutch plate 453 in various traveling states of the motorcycle 1.
(a) Alternatively or additionally to the above, although in the above-mentioned preferred embodiment, the time integration of the rotational speed difference is terminated when the rotational speed difference reaches substantially zero, the time point where the time integration of the rotational speed difference is terminated is not limited to the same. As illustrated in Fig. 12, the time integration of a rotational speed difference may be terminated after an elapse of a predetermined period of time from the time point where the time integration of the rotational speed difference is started.
   Fig. 12 is a flowchart illustrating another example of shift change instruction processing (gear change instruction processing) by a CPU in an ECU. The shift change instruction processing illustrated in Fig. 12 includes processing in step S90 in place of the processing in step S50 in the shift change instruction processing (gear change instruction processing) illustrated in Fig. 8.
   In step S90, the CPU 91 determines whether or not a predetermined period of time has elapsed from the time point where the time integration of the rotational speed difference is started. If the predetermined period of time has not elapsed (NO in step S90), the processing in steps S30, S40 is repeated. If the predetermined period of time has elapsed (YES in step S90), then in step S60, the CPU 91 finishes time-integrating the rotational speed difference, to finish estimating a calorific value.
   In a shift change instruction apparatus 50 according to the present preferred embodiment, a calorific value in a clutch 44 is thus estimated until a predetermined period of time has elapsed from the time point where the time integration of the rotational speed difference is started.
   In this case, even when the rotational speed difference occurs again after decreasing to zero, the rotational speed difference is time-integrated. This results in an improvement in the estimation accuracy of the calorific value. The time point where the time integration of the rotational speed difference is terminated can be determined easily and stably.
   The time point where the time integration of the rotational speed difference is started may be the time point where the shift of the clutch 44 from a disengaged state to an engaged state is started or the time point where a half-clutched state of the clutch 44 is started.
   The processing in step S90 illustrated in Fig. 12 may be included in place of the processing in step S50 in the shift change instruction processing illustrated in Fig. 10. In this case, the calorific value in the clutch 44 is estimated until a predetermined period of time has elapsed from the time point where the time integration of the rotational speed difference is started.
(b) The clutch 44 is not limited to a wet multiple disk friction clutch. It may be a dry multiple disk friction clutch or a single disk clutch.
(c) Although in the above-mentioned preferred embodiment, the clutch device is composed of a single clutch 44, the clutch device may be composed of a plurality of clutches.
(d) The transmission 43 is not limited to a step transmission. It may be a stepless transmission having a belt.
(e) A transmission path of a torque generated by the engine 45 within the power unit 20 is not limited to the transmission path in the above-mentioned preferred embodiment. For example, the clutch 44 may be arranged on the downstream side of the transmission 43 in a torque transmission direction. In this case, the rotation of the main shaft 41 is transmitted to the drive shaft 42 at a predetermined change gear ratio by the transmission 43, and the rotation of the drive shaft 42 is transmitted to the power transmission mechanism 47 (see Fig. 1) via the clutch 44.
   In this case, the ECU 90 can estimate the rotational speed of the friction plate 452 based on the rotational speed detected by the engine rotational speed sensor 31 and the gear position detected by the shift position sensor 32. The ECU 90 can estimate the rotational speed of the clutch plate 453 based on the vehicle speed detected by the vehicle speed sensor 33.
(f) A sensor for directly detecting the rotational speed of the friction plate 452 or the clutch housing 442 may be provided. As described above, the clutch plate 453 and the clutch boss 441, together with the main shaft 41, rotate. Therefore, the rotational speed of the clutch plate 453 or the clutch boss 441 can be directly detected by detecting the rotational speed of the main shaft 41.
   A sensor for directly detecting the rotational speed of the clutch plate 453 or the clutch boss 441 may be provided.
   When the sensor for directly detecting the rotational speed of the friction plate 452 or the clutch housing 442 and the sensor for directly detecting the rotational speed of the clutch plate 453 or the clutch boss 441 are provided, the rotational speed difference is calculated based on the respective detected values of the two sensors.
(g) Although in the above-mentioned preferred embodiment, a driving force of the clutch release mechanism 86 is transmitted to the pressure plate 450 via the inside of the main shaft 41, the present teaching is not limited to the configuration. For example, the clutch 44 may be provided with another moving mechanism that moves the push mechanism 471 outward (rightward in Fig. 2) against the urging force of the belleville spring 451. At least respective parts of the moving mechanism and the clutch release mechanism 86 are provided outside the pressure plate 450. In this case, the push mechanism 471 is connected to the clutch release mechanism 86 via the moving mechanism. When the clutch actuator 60 operates, the push mechanism 471 is pulled outward (rightward in Fig. 2) by the moving mechanism. Thus, the push mechanism 471 moves against the urging force of the belleville spring 451 so that the clutch 44 enters the disengaged state.
(h) The temperature sensor 34 may detect the temperature of oil supplied to the inside of the power unit 20. In this case, the ECU 90 calculates a first estimated temperature To based on at least a third coefficient and the temperature of the oil (environmental temperature). The ECU 90 calculates an estimated clutch temperature Te based on at least a fourth coefficient, the temperature of the oil, and an estimated calorific value Qe. A first coefficient and the third coefficient may be identical to or different from each other. A second coefficient and the fourth coefficient may be identical to or different from each other. For example, the ECU 90 calculates the first estimated temperature To by multiplying or adding the temperature of the oil and the third coefficient together. The ECU 90 calculates the estimated clutch temperature Te by multiplying or adding the estimated calorific value Qe, the temperature of the oil, and the fourth coefficient together.
(i) The ECU 90 may make a notification for urging the rider of the motorcycle 1 to increase the operation amount of the accelerator 63 in place of a down-shifting notification.
(j) Although in the above-mentioned preferred embodiment, the actuator device is composed of the clutch actuator 60 and the shift actuator 70 that are separate from each other, the actuator device may be composed of a single actuator that switches the clutch 44 and switches the transmission gears 49 and 420 in the transmission 43.
   In this case, the potentiometers 38 and 39 may be replaced with a single potentiometer.
(k) A voice output device may be provided in place of or in addition to the display panel 15 to make the down-shifting notification. In this case, the ECU 90 controls the voice output device such that a voice for urging the rider to perform down-shifting is outputted when the estimated calorific value Qe is the reference calorific value Qs or more or when the estimated clutch temperature Te is the reference clutch temperature Ps or more.
(I) Although in the above-mentioned preferred embodiment, the clutch control apparatus 50 is applied to the motorcycle 1 illustrated in Fig. 1 as an example of the vehicle, the clutch control apparatus 50 is similarly applicable to a motorcycle such as a scooter motorcycle, an off load motorcycle, or a racer replica motorcycle. The clutch control apparatus 50 is not limited to the motorcycle. For example, it is similarly applicable to other vehicles such as motor three-wheelers, motor four-wheelers, an all terrain vehicle (ATV), or a snowmobile.
(m) Although in the above-mentioned preferred embodiment, the function of the controller is realized by the CPU 91 in the ECU 90 and the shift change instruction processing program (gear change instruction processing program), the function of the controller may be realized by hardware such as an electronic circuit. In this case, a calorific value estimator that calculates the estimated calorific value Qe based on the rotational speed difference, a clutch temperature estimator that calculates the estimated clutch temperature Te based on the calorific value, a notification requirement determiner that determines whether the down-shifting notification is required based on the estimated calorific value Qe or the estimated clutch temperature Te, an actuator controller that controls the clutch actuator 60 in the clutch 44, and a notification controller that controls the notification by the display panel 15 may be respectively composed of separate electronic circuits or a common electronic circuit.

In the following two paragraphs, non-limiting examples of correspondences between various elements recited in the claims below and those described above with respect to various preferred embodiments are explained.

In the preferred embodiments described above, the motorcycle 1 is an example of a vehicle, the shift change instruction apparatus 50 is an example of a shift change instruction apparatus (gear change instruction apparatus), the clutch 44 is an example of a clutch device, the friction plate 452 is an example of a driving plate, the clutch plate 453 is an example of a driven plate, the transmission 43 is an example of a transmission, the engine rotational speed sensor 31, the shift position sensor 32, the vehicle speed sensor 33, and the ECU 90 are examples of an estimator, the ECU 90 is an example of a determiner, and the display panel 15 is an example of a notifier.

The temperature sensor 34 is an example of a temperature detector, the engine rotational speed sensor 31 is an example of a first rotational speed acquirer, the vehicle speed sensor 33 and the shift position sensor 32 are examples of a second rotational speed acquirer, and the ECU 90 is an example of a calculator.

Furthermore, the reference calorific value Qs is an example of a first value, the reference clutch temperature Ps is an example of a second value, the reference rotational speed difference Rs is an example of a third value, and the temperature of cooling water or the temperature of oil is an example of an environmental temperature.

The engine 45 is an example of an engine, the rear wheel 3 is an example of a driving wheel, the ECU 90 is an example of a controller, the clutch actuator 60 is an example of a clutch actuator, and the shift actuator 70 is an example of a shift actuator.

To sum up the above, in an embodiment an ECU estimates a calorific value by friction between a friction plate and a clutch plate in a clutch, and determines whether a change in the gear position of a transmission is required based on the estimated calorific value. The ECU estimates the temperature of the clutch based on the estimated calorific value, and determines whether or not the change in the gear position of the transmission is required based on the estimated temperature. When the ECU determines that the change in the gear position of the transmission is required, a notification for urging a rider of a motorcycle to change the gear position of the transmission is made by a display panel.

## Claims

1. Gear change instruction apparatus for a friction clutch device (44) having a driving plate (452) and a driven plate (453) and for a transmission (43) having a plurality of gear positions, the gear change instruction apparatus (50) being configured to generate an instruction to change the gear position of the transmission (43) and comprising:
an estimator (31,32,33,90) configured to estimate a calorific value (Qe) by friction between the driving plate (452) and the driven plate (453) in the friction clutch device (44);
a determiner (90) configured to determine whether a change in the gear position of the transmission (43) is required based on the calorific value (Qe) estimated by the estimator (31,32,33,90); and
a notifier (15) configured to make a notification to an operator of the gear change instruction apparatus (50) to change the gear position of the transmission (43) when the determiner (90) determines that the gear position of the transmission (43) must be changed,
**characterized in that**
a temperature detector (34) is configured to detect an environmental temperature of the friction clutch device (44), the estimator (31,32,33,90) is configured to estimate the temperature of the friction clutch device (44) based on the estimated calorific value (Qe) and a detected value of the temperature detector (34), and the determiner (90) is configured to determine whether or not a change in the gear position of the transmission (43) is required based on the temperature estimated by the estimator (31,32,33,90).

2. Gear change instruction apparatus according to claim 1, wherein the determiner (90) is configured to determine that the gear position of the transmission (43) must be changed when the calorific value (Qe) estimated by the estimator (31,32,33,90) is a predetermined first value (Qs) or more.

3. Gear change instruction apparatus according to claim 1 or 2, wherein the determiner (90) is configured to determine that the gear position of the transmission (43) must be changed when the temperature estimated by the estimator (31,32,33,90) becomes a predetermined second value (Ps) or more.

4. Gear change instruction apparatus according to any one of claims 1 to 3, wherein the estimator (31,32,33,90) comprises a first rotational speed acquirer (31) configured to acquire a rotational speed of the driving plate (452) in the friction clutch device (44), a second rotational speed acquirer (32,33) configured to acquire a rotational speed of the driven plate (453) in the friction clutch device (44), and a calculator (90) configured to time-integrate a difference between the rotational speed acquired by the first rotational speed acquirer (31) and the rotational speed acquired by the second rotational speed acquirer (32,33), and to calculate the calorific value (Qe) based on a time-integrated value.

5. Gear change instruction apparatus according to claim 4, wherein the estimator (31,32,33,90) is configured to start to time-integrate the difference between the rotational speeds when the driving plate (452) and the driven plate (453) in the friction clutch device (44) start to move relatively nearer to each other, or the estimator (31,32,33,90) is configured to start to time-integrate the difference between the rotational speeds when the driving plate (452) and the driven plate (453) in the friction clutch device (44) move by a predetermined distance relatively nearer to each other, or the estimator (31,32,33,90) is configured to start to time-integrate the difference between the rotational speeds when the difference between the rotational speeds increases to a third value (Rs) greater than zero.

6. Gear change instruction apparatus according to claim 4 or 5, wherein the estimator (31,32,33,90) is configured to finish time-integrating the difference between the rotational speeds when the difference between the rotational speeds reaches substantially zero.

7. Gear change instruction apparatus according to any one of claims 4 to 6, wherein the estimator (31,32,33,90) is configured to finish time-integrating the difference between the rotational speeds after an elapse of a predetermined period of time (t₁₄ - t₁₀) since the time integration of the difference between the rotational speeds was started.

8. Gear change instruction apparatus according to any one of claims 1 to 7, wherein a gear position detector (32) is configured to detect completion of the change in the gear position of the transmission (43), and, preferably, the notifier (15) is configured to terminate the notification when the gear position detector (32) detects the completion of the change in the gear position of the transmission (43).

9. Gear change instruction apparatus according to any one of claims 1 to 8, wherein the notifier (15) includes a display configured to display the notification to the operator to change the gear position of the transmission (43).

10. Gear change instruction apparatus according to any one of claims 1 to 9, wherein the estimation by the estimator (31,32,33,90), the determination by the determiner (90), and the notification by the notifier (15) are respectively performed at each of a plurality of gear positions of the transmission (43).

11. Vehicle comprising:
a friction clutch device (44) having a driving plate (452) and a driven plate (453);
a transmission (43) having a plurality of gear positions; and
the gear change instruction apparatus (50) according to any one of claims 1 to 10.

12. Vehicle according to claim 11, wherein an engine (45) is configured to generate a torque to rotate at least one driving wheel (23), a transmission path is configured to transmit the torque generated by the engine (45) to the driving wheel (23), and the friction clutch device (44) and the transmission (43) are provided in the transmission path.

13. Vehicle according to claim 11 or 12, wherein a shift switch (72) is operable by the operator to generate an instruction to change the gear position of the transmission (43), a clutch actuator (60) is configured to drive the clutch friction device (44), a shift actuator (70) is configured to drive the transmission (43), and
a controller (91) is configured to control the clutch actuator (60) and the shift actuator (70) based on the instruction from the shift switch (72).

14. Gear change instruction method for a friction clutch device (44) having a driving plate (452) and a driven plate (453) and for a transmission (43) having a plurality of gear positions, the gear change instruction method generating an instruction to change the gear position of the transmission (40) and comprising the following steps:
estimating a calorific value (Qe) by friction between the driving plate (452) and the driven plate (453) in the friction clutch device (44);
determining whether a change in the gear position of the transmission (43) is required based on the calorific value (Qe) estimated; and
making a notification to an operator to change the gear position of the transmission (43) when it is determined that the gear position of the transmission (43) must be changed;
**characterized by** further comprising the steps of:
detecting an environmental temperature of the friction clutch device (44),
estimating the temperature of the friction clutch device (44) based on the estimated calorific value (Qe) and a detected value of the environmental temperature, and
determining whether or not a change in the gear position of the transmission (43) is required based on the temperature estimated.

## Patentansprüche

1. Gangschaltungsanweisungsvorrichtung für eine Reibungskupplungsvorrichtung (44) mit einer Antriebsplatte (452) und einer Abtriebsplatte (453) und für ein Getriebe (43) mit einer Mehrzahl von Gangpositionen, wobei die Gangschaltungsanweisungsvorrichtung (50) konfiguriert ist, eine Anweisung zu erzeugen, um die Gangposition des Getriebes (43) zu verändern und aufweist:
eine Abschätzeinrichtung (31, 32, 33, 90), konfiguriert einen Wärmeerzeugungswert (Qe) durch Reibung zwischen der Antriebsplatte (452) und der Abtriebsplatte (453) in der Reibungskupplungsvorrichtung (44) abzuschätzen;
eine Feststellungseinrichtung (90), konfiguriert festzustellen, ob eine Veränderung in der Gangposition des Getriebes (43) auf der Grundlage des Wärmeerzeugungswertes (Qe), abgeschätzt durch die Abschätzeinrichtung (31, 32, 33, 90), erforderlich ist; und
eine Mitteilungseinrichtung (15), konfiguriert, eine Mitteilung an eine Bedienperson der Gangschaltungsanweisungsvorrichtung (50) zu geben, um die Gangposition des Getriebes (43) zu verändern, wenn die Feststellungseinrichtung (90) feststellt, dass die Gangposition des Getriebes (43) verändert werden muss,
**dadurch gekennzeichnet, dass**
eine Temperaturerfassungseinrichtung (34) konfiguriert ist, eine Umgebungstemperatur der Reibungskupplungsvorrichtung (44) auf der Grundlage des Wärmeerzeugungswertes (Qe) und eines erfassten Wertes der Temperaturerfassungseinrichtung (34) abzuschätzen, und wobei die Feststellungseinrichtung (90) konfiguriert ist festzustellen, ob eine Veränderung der Gangposition des Getriebes (43) auf der Grundlage der Temperatur, abgeschätzt durch die Abschätzeinrichtung (31, 32, 33, 90), erforderlich ist, oder nicht.

2. Gangschaltungsanweisungsvorrichtung nach Anspruch 1, wobei die Feststellungseinrichtung (90) konfiguriert ist, festzustellen, dass die Gangposition des Getriebes (43) verändert werden muss, wenn der Wärmeerzeugungswert (Qe), abgeschätzt durch die Abschätzeinrichtung (31, 32, 33, 90), eine vorbestimmter erster Wert (Qs) oder größer ist.

3. Gangschaltungsanweisungsvorrichtung nach Anspruch 1 oder 2, wobei die Feststellungseinrichtung (90) konfiguriert ist, festzustellen, dass die Gangposition des Getriebes (43) verändert werden muss, wenn die Temperatur, abgeschätzt durch die Abschätzeinrichtung (31, 32, 33, 90), ein vorbestimmter zweiter Wert (Ps) oder größer wird.

4. Gangschaltungsanweisungsvorrichtung nach einem der Ansprüche 1 bis 3, wobei die Abschätzeinrichtung (31, 32, 33, 90) aufweist einen ersten Drehzahlerfasser (31), konfiguriert eine Drehzahl der Antriebsplatte (452) der Reibungskupplungsvorrichtung (44) zu erfassen, einen zweiten Drehzahlerfasser (32, 33), konfiguriert, eine Drehzahl der Abtriebsplatte (453) in der Reibungskupplungsvorrichtung (44) zu erfassen, und eine Recheneinrichtung (90), konfiguriert zum Zeitintegrieren einer Differenz zwischen der Drehzahl, erfasst durch den ersten Drehzahlerfasser (31), und der Drehzahl, erfasst durch den zweite Drehzahlerfasser (32, 33), und den Wärmeerzeugungswert (Qe) auf der Grundlage eines zeitintegrierten Wertes zu berechnen.

5. Gangschaltungsanweisungsvorrichtung nach Anspruch 4, wobei die Abschätzeinrichtung (31, 32, 33, 90) konfiguriert ist das Zeitintegrieren der Differenz zwischen den Drehzahlen zu beginnen, wenn die Antriebsplatte (452) und die Abtriebsplatte (453) in der Reibungskupplungsvorrichtung (44) beginnen, sich relativ näher zueinander zu bewegen, oder die Abschätzeinrichtung (31, 32, 33, 90) konfiguriert ist, das Zeitintegrieren der Differenz zwischen den Drehzahlen zu beginnen, wenn sich die Antriebsplatte (452) und die Abtriebsplatte (453) in der Reibungskupplungsvorrichtung (44) um eine vorbestimmte Distanz relativ näher zueinander bewegen, oder die Abschätzeinrichtung (31, 32, 33, 90) konfiguriert ist, das Zeitintegrieren der Differenz zwischen den Drehzahlen zu beginnen, wenn sich die Differenz zwischen den Drehzahlen auf einen dritten Wert (Rs), größer als Null erhöht.

6. Gangschaltungsanweisungsvorrichtung nach Anspruch 4 oder 5, wobei die Abschätzeinrichtung (31, 32, 33, 90) konfiguriert ist, das Zeitintegrieren der Differenz zwischen den Drehzahlen zu beenden, wenn die Differenz zwischen den Drehzahlen im Wesentlichen Null erreicht.

7. Gangschaltungsanweisungsvorrichtung nach einem der Ansprüche 4 bis 6, wobei die Abschätzeinrichtung (31, 32, 33, 90) konfiguriert ist, das Zeitintegrieren der Differenz zwischen den Drehzahlen nach dem Verstreichen einer vorbestimmten Zeitdauer (t₁₄ - t₁₀), seit die Zeitintegration der Differenz zwischen den Drehzahlen gestartet wurde, zu beenden.

8. Gangschaltungsanweisungsvorrichtung nach einem der Ansprüche 1 bis 7, wobei ein Gangpositionserfasser (32) konfiguriert ist, eine Beendigung der Veränderung in der Gangposition des Getriebes (43) zu erfassen und, vorzugsweise, die Mitteilungseinrichtung (15) konfiguriert ist, die Mitteilung zu beenden, wenn der Gangpositionserfasser (32) die Beendigung des Wechsels in der Gangposition des Getriebes erfasst.

9. Gangschaltungsanweisungsvorrichtung nach einem der Ansprüche 1 bis 8, wobei die Mitteilungseinrichtung (15) eine Anzeige enthält, konfiguriert die Mitteilung an die Bedienperson anzuzeigen die Gangposition des Getriebes (43) zu verändern.

10. Gangschaltungsanweisungsvorrichtung nach einem der Ansprüche 1 bis 9, wobei die Abschätzung durch die Abschätzeinrichtung (31, 32, 33, 90), die Feststellung durch die Feststellungseinrichtung (90) und die Mitteilung durch die Mitteilungseinrichtung (15) jeweils an jeder von einer Mehrzahl von Gangpositionen des Getriebes (43) ausgeführt werden.

11. Fahrzeug, aufweisend:
eine Reibungskupplungsvorrichtung (44) mit einer Antriebsplatte (452) und einer Abtriebsplatte (453);
ein Getriebe (43) mit einer Mehrzahl von Gangpositionen; und
die Gangschaltungsanweisungsvorrichtung (50) nach einem der Ansprüche 1 bis 10.

12. Fahrzeug nach Anspruch 11, wobei eine Brennkraftmaschine (45) konfiguriert ist, ein Drehmoment zu erzeugen, um zumindest ein Antriebsrad (23) anzutreiben, ein Getriebepfad konfiguriert ist, das Drehmoment, erzeugt durch die Brennkraftmaschine (45), auf das Antriebsrad (23) zu übertragen; und wobei die Reibungskupplungsvorrichtung (44) und das Getriebe (43) in dem Getriebepfad vorgesehen sind.

13. Fahrzeug nach Anspruch 11 oder 12, wobei ein Schaltschalter (72) durch die Bedienperson betätigbar ist, um eine Anweisung zu erzeugen, die Gangposition des Getriebes (43) zu verändern, ein Kupplungsbetätiger (60) konfiguriert ist, die Reibungskupplungsvorrichtung (44) anzutreiben, ein Schaltbetätiger (70) konfiguriert ist, das Getriebe (43) anzutreiben, und
eine Steuerungseinrichtung (91) konfiguriert ist, den Kupplungsbetätiger (60) und den Schaltbetätiger (70) auf der Grundlage der Anweisung von dem Schaltungsschalter (72) zu steuern.

14. Gangschaltungsanweisungsverfahren für eine Reibungskupplungsvorrichtung (44) mit einer Antriebsplatte (452) und einer Abtriebsplatte (453) und für ein Getriebe (43) mit einer Mehrzahl von Gangpositionen, wobei das Gangschaltungsanweisungsverfahren eine Anweisung zu erzeugt, um die Gangposition des Getriebes (43) zu verändern und die folgenden Schritte aufweist:
Abschätzen eines Wärmeerzeugungswertes (Qe) durch Reibung zwischen der Antriebsplatte (452) und der Abtriebsplatte (453) in der Reibungskupplungsvorrichtung (44);
Feststellen, ob eine Veränderung in der Gangposition des Getriebes (43) auf der Grundlage des abgeschätzten Wärmeerzeugungswertes (Qe) erforderlich ist; und
Geben einer Mitteilung an eine Bedienperson, um die Gangposition des Getriebes (43) zu verändern, wenn es festgestellt wird, dass die Gangposition des Getriebes (43) verändert werden muss;
**gekennzeichnet durch** außerdem die Schritte aufweisend von:
Erfassen einer Umgebungstemperatur der Reibungskupplungsvorrichtung (44),
Abschätzen der Temperatur der Reibungskupplungsvorrichtung (44) auf der Grundlage des abgeschätzten Wärmeerzeugungswertes (Qe) und eines erfassten Wertes der Umgebungstemperatur, und
Feststellen, ob eine Veränderung in der Gangposition des Getriebes (43) auf der Grundlage der abgeschätzten Temperatur erforderlich ist, oder nicht.

## Revendications

1. Appareil donneur d'ordre de changement de vitesse pour un dispositif d'embrayage à friction (44) comportant un plateau d'entrainement (452) et un plateau entrainé (453) et pour une transmission (43) mettant en jeu une pluralité de vitesses, l'appareil donneur d'ordre de changement de vitesse (50) étant configuré pour générer un ordre de changement de la vitesse de la transmission (43) et comprenant :
- un dispositif d'estimation (31, 32, 33, 90) configuré pour estimer une valeur calorifique (Qe) engendrée par la friction entre le plateau d'entrainement (452) et le plateau entrainé (453) dans le dispositif d'embrayage à friction (44) ;
- un dispositif de détermination (90) configuré pour déterminer si un changement de la vitesse de la transmission (43) est nécessaire en fonction de la valeur calorifique (Qe) estimée par le dispositif d'estimation (31, 32, 33, 90) ; et
- un dispositif de notification (15) configuré pour notifier à un opérateur de l'appareil donneur d'ordre de changement de vitesse (50) de changer la vitesse de la transmission (43) lorsque le dispositif de détermination (90) détermine que la vitesse de la transmission (43) doit être changée,
- **caractérisé en ce que** :
- un détecteur de température (34) est configuré pour détecter une température ambiante du dispositif d'embrayage à friction (44), le dispositif d'estimation (31, 32, 33, 90) est configuré pour estimer la température du dispositif d'embrayage à friction (44), en fonction de la valeur calorifique estimée (Qe) et de la valeur détectée par le détecteur de température (34), et le dispositif de détermination (90) est configuré pour déterminer si un changement de la vitesse de la transmission (43) est nécessaire ou non en fonction de la température estimée par le dispositif d'estimation (31, 32, 33, 90).

2. Appareil donneur d'ordre de changement de vitesse selon la revendication 1, dans lequel le dispositif de détermination (90) est configuré pour déterminer que la vitesse de la transmission (43) doit être changée lorsque la valeur calorifique (Qe) estimée par le dispositif d'estimation (31, 32, 33, 90) est supérieure ou égale à une première valeur prédéterminée (Qs).

3. Appareil donneur d'ordre de changement de vitesse selon les revendications 1 ou 2, dans lequel le dispositif de détermination (90) est configuré pour déterminer que la vitesse de la transmission (43) doit être changée lorsque la température estimée par le dispositif d'estimation (31, 32, 33, 90) devient supérieure ou égale à une seconde valeur prédéterminée (Ps).

4. Appareil donneur d'ordre de changement de vitesse selon l'une quelconque des revendications 1 à 3, dans lequel le dispositif d'estimation (31, 32, 33, 90) comprend un premier dispositif d'acquisition de vitesse de rotation (31) configuré pour acquérir une vitesse de rotation du plateau d'entrainement (452) dans le dispositif d'embrayage à friction (44), un second dispositif d'acquisition de vitesse de rotation (32, 33) configuré pour acquérir une vitesse de rotation du plateau entrainé (453) dans le dispositif d'embrayage à friction (44) et un calculateur (90) configuré pour intégrer dans le temps une différence entre la vitesse de rotation acquise par le premier dispositif d'acquisition de vitesse de rotation (31) et la vitesse de rotation acquise par le second dispositif d'acquisition de vitesse de rotation (32, 33) et pour calculer la valeur calorifique (Qe) en fonction de la valeur intégrée dans le temps.

5. Appareil donneur d'ordre de changement de vitesse selon la revendication 4, dans lequel le dispositif d'estimation (31, 32, 33, 90) est configuré pour commencer à intégrer dans le temps la différence entre les vitesses de rotation lorsque le plateau d'entrainement (452) et le plateau entrainé (453) dans le dispositif d'embrayage à friction (44) commencent à se rapprocher l'un de l'autre, le dispositif d'estimation (31, 32, 33, 90) est configuré pour commencer à intégrer dans le temps la différence entre les vitesses de rotation lorsque le plateau d'entrainement (452) et le plateau entrainé (453) dans le dispositif d'embrayage à friction (44) se rapprochent l'un de l'autre d'une distance prédéterminée ou le dispositif d'estimation (31, 32, 33, 90) est configuré pour commencer à intégrer dans le temps la différence entre les vitesses de rotation lorsque la différence entre les vitesses de rotation augmente jusqu'à une troisième valeur (Rs) supérieure à zéro.

6. Appareil donneur d'ordre de changement de vitesse selon les revendications 4 ou 5, dans lequel le dispositif d'estimation (31, 32, 33, 90) est configuré pour finir d'intégrer dans le temps la différence entre les vitesses de rotation lorsque la différence entre les vitesses de rotation atteint sensiblement zéro.

7. Appareil donneur d'ordre de changement de vitesse selon l'une quelconque des revendications 4 à 6, dans lequel le dispositif d'estimation (31, 32, 33, 90) est configuré pour finir d'intégrer dans le temps la différence entre les vitesses de rotation une fois qu'une période de temps prédéterminée (t₁₄ - t₁₀) s'est écoulée depuis que l'intégration dans le temps de la différence entre les vitesses de rotation a commencée.

8. Appareil donneur d'ordre de changement de vitesse selon l'une quelconque des revendications 1 à 7, dans lequel un détecteur de vitesse (32) est configuré pour détecter l'achèvement d'un changement de la vitesse de la transmission (43) et, de préférence, le dispositif de notification (15) est configuré pour terminer la notification lorsque le détecteur de vitesse (32) détecte l'achèvement du changement de la vitesse de la transmission (43).

9. Appareil donneur d'ordre de changement de vitesse selon l'une quelconque des revendications 1 à 8, dans lequel le dispositif de notification (15) comprend un afficheur configuré pour afficher la notification à l'opérateur de changer la vitesse de la transmission (43).

10. Appareil donneur d'ordre de changement de vitesse selon l'une quelconque des revendications 1 à 9, dans lequel l'estimation par le dispositif d'estimation (31, 32, 33, 90), la détermination par le dispositif de détermination (90) et la notification par le dispositif de notification (15) sont respectivement effectuées à chacune d'une pluralité de vitesse de la transmission (43).

11. Véhicule comprenant :
- un dispositif d'embrayage à friction (44) comportant un plateau d'entrainement (452) et un plateau entrainé (453) ;
- une transmission (43) mettant en jeu une pluralité de vitesses ; et
- un appareil donneur d'ordre de changement de vitesse (50) selon l'une quelconque des revendications 1 à 10.

12. Véhicule selon la revendication 11, dans lequel un moteur (45) est configuré pour générer un couple pour entrainer en rotation au moins une roue motrice (23), un trajet de transmission est configuré pour transmettre le couple généré par le moteur (45) à la roue motrice et le dispositif d'embrayage à friction (44) et la transmission (43) sont disposés dans le trajet de transmission.

13. Véhicule selon les revendications 11 ou 12, dans lequel un commutateur de changement (72) peut être actionné par l'opérateur pour générer un ordre de changement de la vitesse de la transmission (43), un actionneur d'embrayage (60) est configuré pour actionner le dispositif d'embrayage à friction (44), un actionneur de changement (70) est configuré pour actionner la transmission (43) et
- un dispositif de commande (91) est configuré pour commander l'actionneur d'embrayage (60) et l'actionneur de changement (70) en fonction de l'ordre donné via le commutateur de changement (72).

14. Procédé donneur d'ordre de changement de vitesse pour un dispositif d'embrayage à friction (44) comportant un plateau d'entrainement (452) et un plateau entrainé (453) et pour une transmission (43) mettant en jeu une pluralité de vitesses, le procédé donneur d'ordre de changement de vitesse générant un ordre de changement de la vitesse de la transmission (43) et comprenant les étapes suivantes :
- estimer une valeur calorifique (Qe) engendrée par la friction entre le plateau d'entrainement (452) et le plateau entrainé (453) dans le dispositif d'embrayage à friction (44) ;
- déterminer si un changement de la vitesse de la transmission (43) est nécessaire en fonction de la valeur calorifique (Qe) estimée ; et
- notifier à un opérateur de changer la vitesse de la transmission (43) lorsqu'il est déterminé que la vitesse de la transmission (43) doit être changée ;
- **caractérisé en ce qu'**il comprend en outre les étapes consistant à :
- détecter une température ambiante du dispositif d'embrayage à friction (44) ;
- estimer la température du dispositif d'embrayage à friction (44) en fonction de la valeur calorifique estimée (Qe) et de la valeur détectée de la température ambiante ; et
- déterminer si un changement de la vitesse de la transmission (43) est nécessaire ou non en fonction de la température estimée.
